Europäisches Patentamt

European Patent Office

Office européen des brevets

(11) Numéro de publication: **0 122 212**
**B1**

(12) **FASCICULE DE BREVET EUROPEEN**

(45) Date de publication du fascicule du brevet: **18.05.88**

(21) Numéro de dépôt: **84440015.0**

(22) Date de dépôt: **06.04.84**

(51) Int. Cl.⁴: **H 05 B 7/14**

(54) **Machine à rabouter les électrodes de fours à arc électrique.**

(30) Priorité: **07.04.83 FR 8305821**
**30.03.84 FR 8405194**

(43) Date de publication de la demande:
**17.10.84 Bulletin 84/42**

(45) Mention de la délivrance du brevet:
**18.05.88 Bulletin 88/20**

(84) Etats contractants désignés:
**AT BE CH DE GB IT LI LU NL SE**

(56) Documents cités:
**EP-A-0 018 953**
**EP-A-0 063 278**
**EP-A-0 063 279**
**EP-A-0 071 107**
**DE-A-1 690 556**
**DE-A-2 338 741**
**DE-A-2 418 688**
**DE-A-2 624 974**
**DE-A-3 016 350**
**DE-B-1 081 984**
**FR-A- 913 419**
**FR-A-2 176 156**
**US-A-2 322 918**
**US-A-4 185 158**

(73) Titulaire: **Corbethau, Eric**
**13, rue du Chêne**
**F-67200 Oberhausbergen (FR)**

(72) Inventeur: **Corbethau, Eric**
**13, rue du Chêne**
**F-67200 Oberhausbergen (FR)**

(74) Mandataire: **Nuss, Pierre**
**10, rue Jacques Kablé**
**F-67000 Strasbourg (FR)**

Courier Press, Leamington Spa, England.

**Description**

La présente invention concerne le domaine des fours à arc électrique équipant les aciéries et fonderies, et a pour objet une machine à rabouter les électrodes de tels fours.

Actuellement, le montage de telles électrodes s'effectue généralement par assemblage manuel d'une colonne de trois électrodes sur un stand de montage, d'où ladite colonne est reprise pour être transférée sur le four au moyen d'un pont roulant.

Après consommation partielle, une telle colonne est retirée du four, en vue de son refroidissement et du raboutage ultérieur d'une nouvelle électrode.

Un tel procédé de montage entraîne, cependant, une perte de temps relativement importante, et donc une immobilisation relativement longue des installations, ce qui provoque, en outre, une oxydation de l'électrode ainsi qu'une important déperdition de chaleur dans le four.

Il est également possible d'effectuer, dans certains cas, un montage manuel des électrodes directement sur le four, pendant son fonctionnement. Ce mode de réalisation évite les inconvénients du procédé précité, mais sa mise en oeuvre est toutefois pénible et dangereuse pour les opérateurs.

On connaît par ailleurs de DE—A—2 418 688 une machine à rabouter les électrodes des fours à arc électrique, essentiellement constituée par un corps muni d'une anse d'accrochage à un crochet de pont roulant, par une cloche logée dans le corps et pourvue de deux mandrins de serrage, respectivement supérieur et inférieur, d'un mandrin de centrage disposé entre les mandrins de serrage, et par un dispositif d'entraînement en rotation et en translation de la cloche constitué par un ensemble vis—écrous de déplacement en translation de la cloche et par un dispositif d'entraînement en rotation et de freinage.

Or, une telle machine ne permet pas un fonctionnement entièrement automatique du raboutage.

La présente invention a pour but de pallier ces inconvénients.

Elle a, en effet, pour objet, une machine à rabouter les électrodes de fours à arc électrique, essentiellement constituée par un corps muni d'une anse d'accrochage à un crochet de pont roulant, par une cloche logée dans le corps et pourvue de deux mandrins de serrage, respectivement supérieur et inférieur, d'un mandrin de centrage disposé entre les mandrins de serrage, et par un dispositif d'entraînement en rotation et en translation de la cloche constitué par un ensemble vis—écrou de déplacement en translation de la cloche et par un dispositif d'entraînement en rotation et de freinage, caractérisée en ce que le mandrin supérieur est équipé d'une butée expansible limitant son ouverture, et de pignons d'entraînement de la spirale de serrage des mors escamotables, en ce que le dispositif est muni de moteurs de vissage final de l'électrode, et en ce que l'ensemble des éléments de commande est asservi pneumatiquement.

Conformément à une variante de réalisation de l'invention, pour le raboutage des électrodes par le bas, la machine est essentiellement constituée par une cloche, logée dans un bâti vertical en deux éléments inférieur et supérieur reliés entre eux par une plaque support, et munie près de sont ouverture d'un mandrin différentiel unique à commande hydropneumatique, par un ensemble vérin de référence—vérin de translation verticale agissant sur la partie inférieure de la cloche par l'intermédiaire d'une plaque de poussée, d'un support creux et de l'ensemble vis—écrou de vissage de l'électrode, par une came de centrage centrée sur la cloche et coopérant avec le mandrin différentiel, et par un ensemble d'étalonnage de la force de vissage de l'électrode monté dans la partie supérieure de bâti vertical.

Conformément à une autre variante de réalisation de l'invention, pour le raboutage des électrodes par le haut, le corps de logement de la cloche est relié à l'anse d'accrochage à un crochet de pont roulant par l'intermédiaire de ressorts pneumatiques, les mandrins de serrage supérieur et inférieur, ainsi que le mandrin de centrage sont à commande hydropneumatique, le mandrin supérieur coopérant avec une came de centrage, une pompe hydropneumatique alimentant lesdits mandrins avec interposition d'un circuit pneumatique de commande, dont l'alimentation est assurée par des réservoirs à air comprimé à remplissage périodique au moyen d'un surpresseur.

L'invention sera mieux comprise grâce à la description ci-après, qui se rapporte à des modes de réalisation préférés données à titre d'exemples non limitatifs, et expliqués avec référence aux dessins schématiques annexés, dans lesquels:

la figure 1 est une vue en élévation et en coupe d'une machine conforme à l'invention en position de chargement d'une électrode;

la figure 2 est une vue en coupe, à plus grande échelle de la machine suivant la figure 1;

la figure 3 est une vue en coupe, à échelle agrandie, suivant A—A de la figure 2;

la figure 4 est une vue en coupe à échelle agrandie, suivant B—B de la figure 2;

la figure 5 est une vue en élévation latérale et en coupe d'une variante de réalisation de la machine conforme à l'invention;

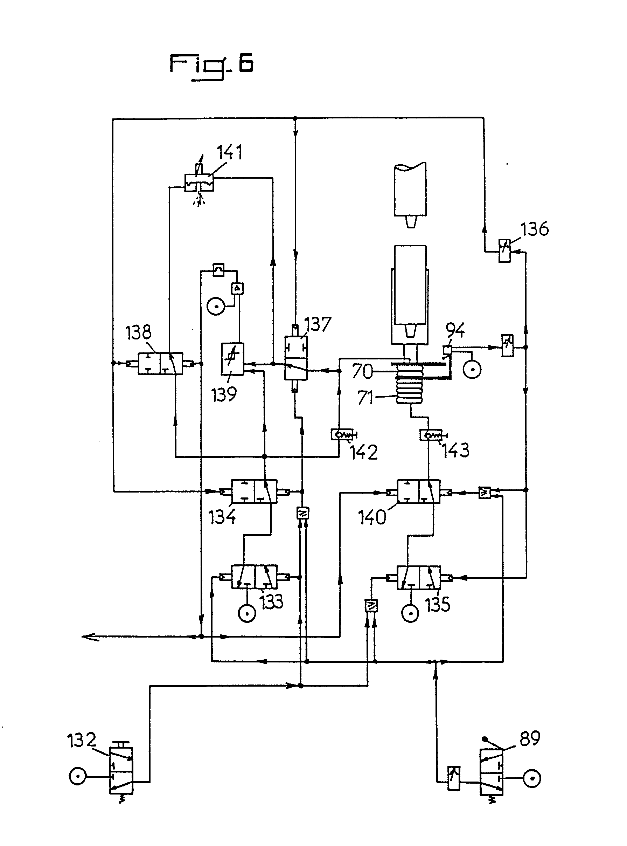

la figure 6 est un schéma de la commande pneumatique du vissage;

la figure 7 est une vue en coupe, à plus grande échelle, suivant A—A de la figure 5;

la figure 8 est une demi-vue en coupe suivant B—B de la figure 5;

la figure 9 est une vue en élévation latérale d'un poste de chargement d'électrodes;

la figure 10 est une vue partielle, à plus grande échelle, en élévation latérale, d'un chariot de déplacement de la machine à rabouter;

la figure 11 est une vue en plan du chariot de la figure 10;

la figure 12 est une vue en élévation latérale d'une variante de poste de chargement d'électrodes;

la figure 13 est une vue en plan correspondant à la figure 12;

la figure 14 est une vue en élévation latérale et partiellement en coupe d'une autre variante de réalisation de l'invention;

la figure 15 est une vue partielle en coupe des mandrins;

la figure 16 représente en élévation latérale et partiellement en coupe une variante de réalisation de la machine suivant la figure 14;

la figure 17 est une vue en élévation latérale d'un nipple de transport, et

la figure 18 est une vue en élévation et en coupe suivant la figure 17.

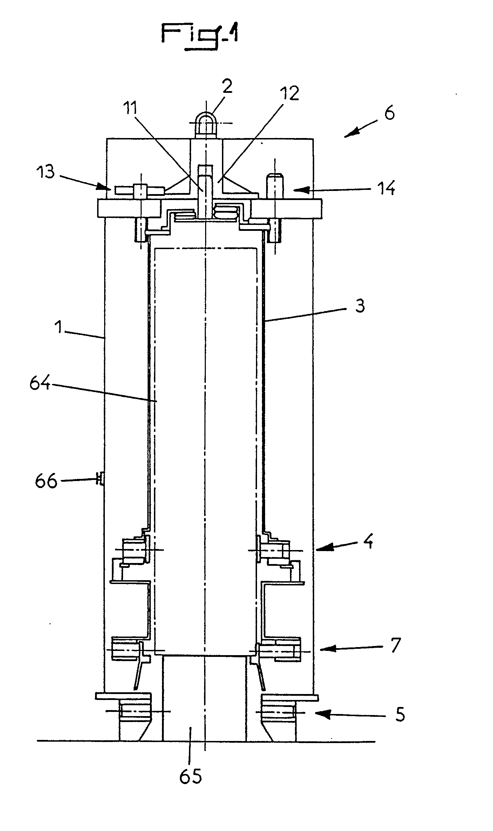

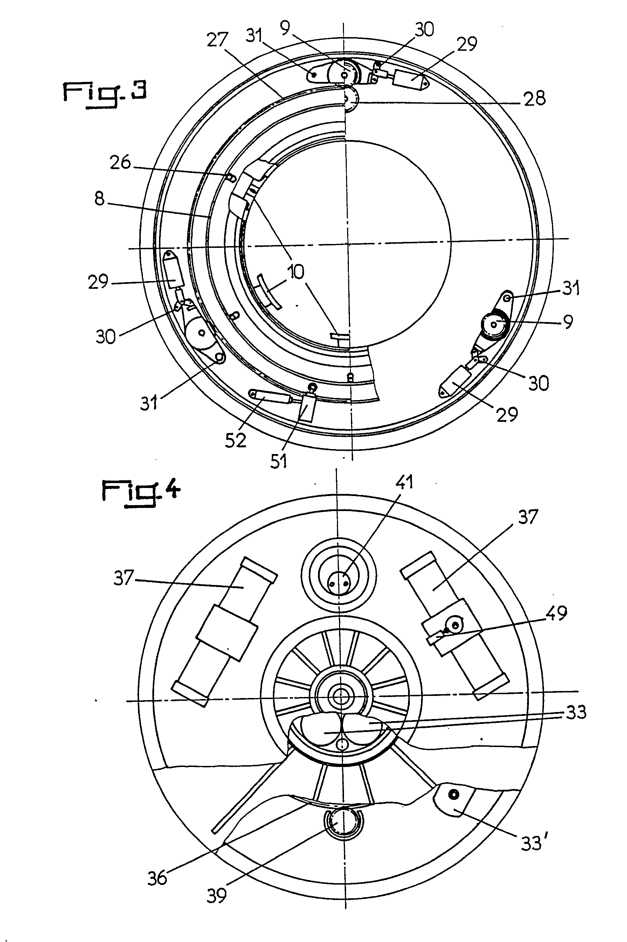

Conformément à l'invention, et comme le montrent plus particulièrement, à titre d'exemple, les figures 1 et 3 des dessins annèxés, la machine à rabouter les électrodes de fours à arc électrique, qui est essentiellement constituée par un corps 1 muni d'une anse 2 d'accrochage à un crochet d'un pont roulant, par une cloche 3 logée dans le corps 1, et pourvue de deux mandrins 4 et 5, respectivement supérieur et inférieure, et par un dispositif 6 d'entraînement en rotation de la cloche 3, est caractérisée en ce que la cloche 3 est munie, entre ses mandrins de serrage 4 et 5, d'un mandrin de centrage 7, et le mandrin supérieur 4 est muni d'une butée expansible 8, qui limite son ouverture, et de pignons 9 d'entraînement de la spirale de serrage des mors 10 débrayables, et en ce que le dispositif 6 d'entraînement en rotation de la cloche 3 est constitué par un ensemble vis 11—écrou 12 de déplacement en translation de la cloche 3, par des moteurs 13 de vissage final de l'électrode, et par un dispositif 14 d'entraînement en rotation et de freinage de la cloche 3. L'ensemble des dispositifs de commande de la machine conforme à l'invention est asservi pneumatiquement.

Le mandrin de centrage 7 est constitué par des mors 15 à épaulement intérieur 15″, qui engrènent par leur face arrière avec une spirale dentée 16, dont les dents coopèrent avec le pignon 17 de l'arbre d'un moteur pneumatique 18, par des flasques 19 et 20 solidaires du corps 1, et servant respectivement de support au moteur ·18 et de centrage et de guidage de la spirale dentée 16, et de guidage des mors 15, par un ensemble butée 21—contact 22 de fin de course d'ouverture des mors 15, et par un ensemble butée 23—tige de commande 24—contact 25 de fin de course d'approche de la machine chargée sur une électrode en service.

Les mors 15 sont pourvus chacun d'une patte 15′ en saillie en direction du mandrin de serrage inférieur 5 et inclinée ves l'extérieur par rapport à l'axe de la cloche 3 d'un angle correspondant à l'angle d'inclinaison de la partie filetée d'extrémité de l'électrode, et l'épaulement intérieur 15″ forme une cale de sécurité pour le transport et présente une épaisseur telle que tout contact entre les filets des électrodes à assembler soit évité.

La butée expansible 8 équipant le mandrin 4 est constituée, de préférence, par des segments circulaires reliés entre eux à la manière de charnières au moyen d'axes 26 solidaires des mors 10, et avantageusement recouverts d'un manchon en néoprène, et les pignons 28 d'entraînement de sa spirale de serrage 27, au moyen d'un moteur pneumatique 32, sont chacun en liaison d'entraînement débrayable avec ladite spirale 27 au moyen d'un pignon 9 escamotable par l'intermédiaire d'un vérin 29 et d'une genouillère 30 par pivotement autour d'un axe 31 (figure 3).

La vis 11 de l'ensemble vis 11—écrou 12 de déplacement en translation de la cloche 3 est solidaire de cette dernière par l'intermédiaire de vérins souples 33, avantageusement reliés à un réservoir tampon 33′, et coopérant avec un tambour 35 fixé sur un flasque 35 de l'extrémité supérieure de la cloche 3, ce flasque portant une couronne dentée 36 d'entraînement en rotation coopérant avec les moteurs 13, et avec le dispositif 14 (figure 4).

Grâce à ce mode de réalisation, le montage de la cloche 3 sur la vis 11 est un montage flottant permettant d'absorber les fluctuations de charge par équilibrage des pressions dans les vérins souples 33.

L'écrou 12 est solidaire du corps 1, qui porte, en outre, d'une part, les moteurs 13 de vissage final de l'électrode, qui sont sous forme de vérins de couplage 37 munis chacun d'un embrayage à denture 38 et d'un pignon d'entraînement 39 coopérant avec la couronne dentée 36, et, d'autre part, le dispositif d'entraînement en rotation et de freinage 14 de la cloche 3, qui est constitué par un pignon 40 d'entraînement de la cloche 3, solidaire d'un moteur penumatique 41, et par un frein 42 interposé entre le moteur 41 et le pignon 40.

L'écrou 12 est muni d'un contact de fin de course 43 détectant le déplacement vertical de la cloche 3 sous l'effet du gonflage des vérins souples 33, qui actionnent le tambour 34, et sur l'arbre de levage 44 solidaire de l'écrou 12 et de l'anse de levage 2 sont prévus des contacts de fin de course haute et basse 45 et 46 de la vis 11, qui coopèrent avec une rondelle 47 solidaire de cette dernière.

L'arbre d'entraînement d'au moins un pignon 39 d'un moteur 13 est muni, en outre, d'une came 48 coopérant avec un contact de fin de course 49 de limitation de la rotation du pignon 39, qui est un circuit avec un pressostat temporisé taré à une valeur légèrement inférieure à celle du couple de serrage nécessaire entre les électrodes, et qui actionne après temporisation l'embrayage 38 du vérin 37 et commande le retour de ce dernier si ledit couple n'est pas atteint, en vue d'une répétition du serrage jusqu'à atteinte du couple.

L'alimentation en air comprimé des vérins souples 33 et du réservoir tampon 33′ s'effectue à travers une conduite coaxiale de la vis 11 qui est munie d'un raccord rotatif 50 relié à la conduite d'alimentation en air comprimé principale, qui est raccordée, soit à un compresseur prévu sur le pont roulant au moyen d'une conduite souple, soit à un réservoir sous pression prévu dans ou sur le corps 1.

Le mandrin supérieur 4 est, en outre, équipé d'un contact de fin de course escamotable 51 actionné par un vérin 52, et commandant l'ouverture du mandrin inférieur 5 ainsi qu'une temporisation de remontée de la cloche 3 à son point de départ après une opération de vissage d'électrode.

Le mandrin inférieur 5 est muni, d'une part, sur la périphérie de sa partie de guidage 53, de soufflettes 54 à durée de fonctionnement limitée· par temporisation, et dont la mise en marche est commandée par un interrupteur temporisé 55 actionné par une ·tige 56 en saillie sur la partie inférieure du mandrin 5, et, d'autre part, d'un contact 57 de fin de course d'ouverture des mors 58 coopérant, au moyen d'une tige 59 avec une came 60 solidaire d'un mors 58, les mors 58 étant pourvus, en outre, chacun d'une butée 61 coopérant avec un évidement correspondant d'un flasque de guidage 62.

Enfin, la cloche 3 est pourvue sur sa périphérie, au niveau des épaulements 15″ des mors 15 du mandrin de centrage 7, de soufflettes 63, dont l'actionnement est commandé par l'intermédiaire d'une temprisation (non représentée) par le contact 22 de fin de course d'ouverture des mors, et dont la durée de fonctionnement est règlée par une temporisation en fonction des besoins.

La machine conforme à l'invention fonctionne de la manière suivante:

L'électrode à rabouter 64 (figure 1), qui est placée verticalement sur un support 65 est coiffée par la machine, qui est fixée au crochet d'un pont roulant par son anse 2. La fixation de l'électrode commence par mise en marche de l'ensemble au moyen d'un bouton d'actionnement 66, prévu sur le corps 1, et qui provoque le blocage du frein 42 ainsi que la mise en marche du moteur 32 provoquant le serrage du mandrin supérieur 4. Un pressostat temporisé, non représenté, placé sur la conduite d'alimentation du moteur 32 commande son arrêt et la mise sous pression des vérins souples 33 et du réservoir tampon 33′. Lorsque la pression dans les vérins 33 devient supérieur au poids de l'ensemble cloche 3—électrode 64, la cloche 3 monte à l'intérieur du corps 1 et appuie sur le contact de fin de course 43, qui ferme l'alimentation des vérins 33 et commande le démarrage du moteur 18 de fermeture des mors 15 du mandrin de centrage 7. En fin de serrage de ce mandrin, un pressostate (non représenté) monté sur la conduite d'alimentation du moteur 18 ferme l'arrivée d'air comprimé à ce dernier et délivre un signal de fin de cycle sonore et/ou lumineux, de manière connue.

L'électrode 64 est alors maintenue dans la cloche 3 et calée à sa base par les épaulements 15″ des mors 15, et elle peut être transférée au-dessus du four. Lors de son levage, la tige de commande 56 déclenche l'interrupteur temporisé 55, et ce dernier actionne, après un laps de temps déterminé en fonction de la durée du trajet stand-four, les soufflettes 54, dont la durée de fonctionnement est également limitée par une temporisation.

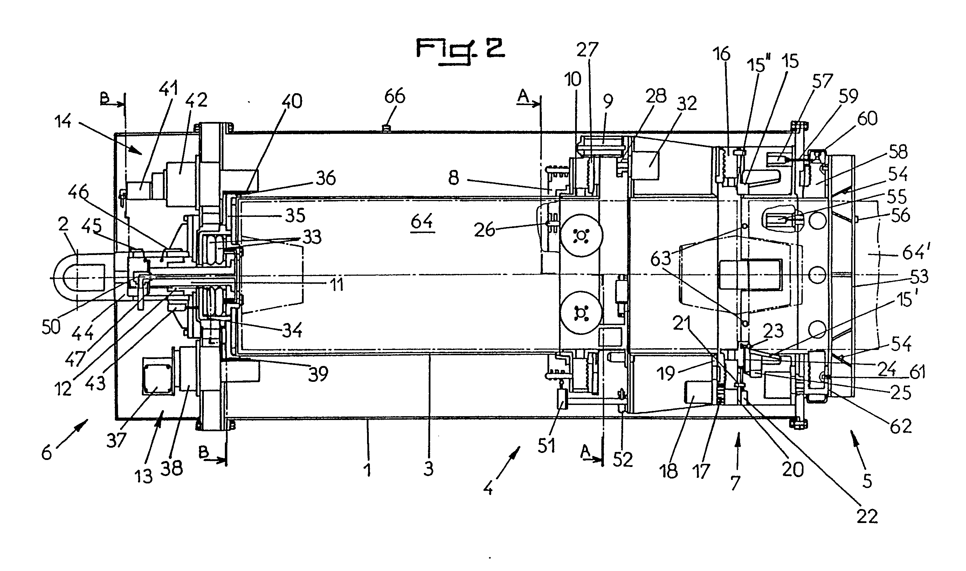

Lors de la descente de l'électrode à rabouter 64 sur l'électrode 64′ du four (figure 2), le contact de fin de course 25 est actionné par l'intermédiaire de sa butée 23 et de sa tige de commande 24, et commande la fermeture du mandrin inférieur 5, tandis qu'un pressostat temprisé placé sur la conduite d'alimentation du moteur de fermeture du mandrin 5 commande l'ouverture du mandrin de centrage 7. En fin de course d'ouverture de ce dernier, la butée 21 équipant un de ses mors 15 appuie sur le contact de fin de course d'ouverture 22, qui provoque le déblocage du frein 42 et la mise en marche du moteur 41 d'entraînement en rotation de la cloche 3, à laquelle est imprimé simultanément un mouvement de translation dû au dévissage de la vis 11 dans l'écrou 12, le pas de la vis 11 correspondant à celui du filetage de l'électrode 64. Le contact 22 actionne simultanément une temporisation commandant le dégagement partiel des pignons 9 au moyen des vérins 29 ainsi que le mise en marche des soufflettes 63, de sorte qu'un assemblage libre des électrodes est possible en cas d'excentricité des axes des filetages par rapport aux génératrices des électrodes, et qu'un flux d'air au ras des surfaces de contact des électrodes est assuré, qui garantit la propreté des surfaces de contact.

Le volume d'air contenu dans le réservoir tampon 33′ est calculé afin de permettre une limitation de la pression sur les flancs des filets à quelques dizaines de kilogrammes lors du contact entre les filetages avant le vissage.

A la fin du vissage, les faces des électrodes 64 et 64′ étant en contact, le moteur 41 se bloque, et un pressostat monté sur sa conduite d'alimentation délivre un signal de commande aux vérins de couplage 37, auxquels les embrayages 38 solidarisent les pignons d'entraînement 39, et qui provoquent alors un déplacement angulaire de la cloche 3 maintenant l'électrode. Le couple fourni par les vérins 37 est règlé avec précision au moyen d'un détendeur, et un pressostat temporisé (non représenté), taré à une valeur légèrement inférieure à la pression nécessaire au couple de vissage, actionne les embrayages 38 et commande le retour en position de départ des vérins 37. Dans le cas où ce couple de vissage final n'est pas atteint à l'arrivée en fin de course des vérins 37, la came 48, équipant l'axe du pignon 39 d'au moins un vérin, actionne le contact de fin de course 49, qui déclenche un retour en position de départ des vérins 37 après débrayage et un nouveau cycle de vissage jusqu'à obtention du couple désiré.

Dès atteinte de la pression correspondant à ce couple, le pressostat commande le retour en position de départ des vérins 37 de la manière décrite précédemment. Le contact de fin de course 49 commande alors les vérins 29, qui provoquent l'engrènement des pignons 9 avec la couronne dentée de la spirale de serrage 27, et l'arrivée en fin de course de ces pignons 9 provoque l'actionnement du frein 42 et la mise en position active du contact de fin de course escamotable 51 au moyen de son vérin 52 ainsi que l'actionnement du moteur pneumatique 32 en vue de l'ouverture du mandrin 4. Cette ouverture est stoppée par le contact de fin de course 51, qui commande alors la purge des vérins souples 33 et du réservoir tampon 33', le déblocage du frein 42 et l'ouverture du mandrin inférieur 5, dont le contact de fin de course 57 commande l'escamotage du contact 51 au moyen du vérin 52, délivre un signal de fin de cycle sonore et/ou lumineux, et commande, par l'intermédiaire d'une temporisation, la remontée de la cloche 3 à son point de départ au moyen du moteur 41.

Le contact de fin de course haute 45 coupe l'alimentation du moteur 41, dès qu'il est actionné par la rondelle 47 solidaire de la vis 11, et actionne le frein 42.

Le contact de fin de course basse 46 est destiné à couper l'alimentation du moteur, dès son actionnement, pour éviter une sortie excessive de la vis 11 hors de l'écrou 12, et la butée expansible 8 est destinée à permettre un actionnement du contact de fin de course escamotable 51 quelle que soit la position angulaire du mandrin 4, l'escamotage de ce contact étant prévu pour éviter un contact prolongé de son galet avec le butée 8 lors des déplacements de montée ou de descente de la cloche 3.

La machine conforme à l'invention permet la manutention d'électrode de longueur et de diamètre variables et fonctionne entièrement à l'air comprimé, de sorte qu'elle présente une grande fiabilité et une grande sécurité d'utilisation en milieu chaud et poussiéreux.

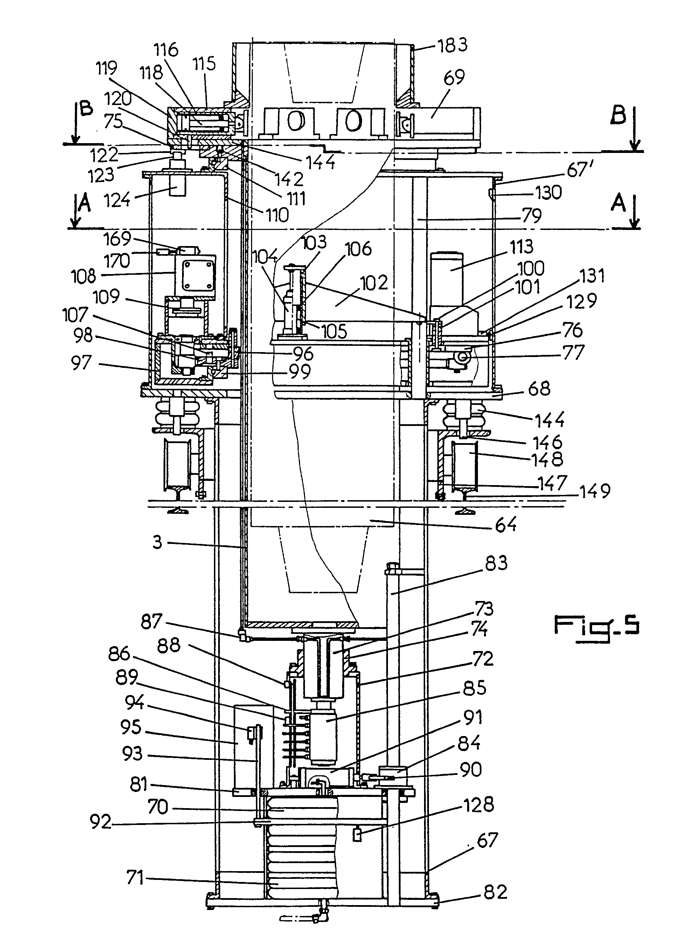

Conformément à une variante de réalisation de l'invention, et comme le montre plus particulièrement, à titre d'exemple, la figure 5 des dessins annexés, pour le raboutage des électrodes par le bas, la machine est essentiellement constituée par une cloche 3, qui est logée dans un bâti vertical formé par deux éléments inférieur 67 et supérieur 67', qui sont reliés entre eux par une plaque support 68, cette cloche 3 étant munie d'un mandrin différentiel 69 unique à commande hydropneumatique, près de son ouverture, et par un ensemble vérin de référence 70—vérin de translation verticale 71, qui agit sur la partie inférieure de la cloche 3 avec interposition d'une plaque de poussée 81, d'un support creux 72 et de l'ensemble vis 73—écrou 74 de vissage de l'électrode 64. Sous le mandrin différentiel 69 est prévue une came de centrage 75 centrée sur la cloche 3 et coopérant avec ledit mandrin 69, et un ensemble 76 à 78 étalonnage de la force de vissage de l'électrode 64 est monté dans la partie supérieure 67' du bâti vertical.

Les parties supérieure 67' et inférieure 67 du bâti vertical se présentent sous forme de cadres ajourés revêtus de panneaux amovibles permettant un accès aisé aux divers éléments qu'ils renferment.

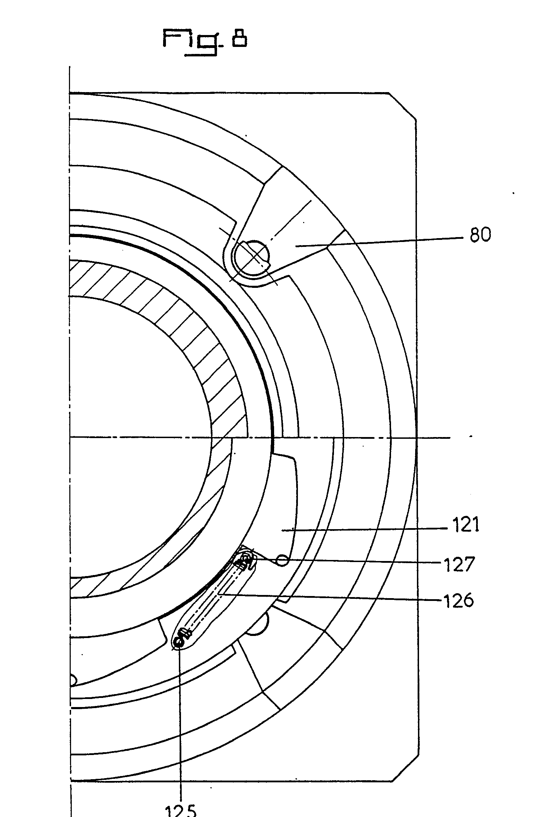

La cloche 3 est guidée en translation verticale au moyen de quatre axes 79, qui sont logés dans des alésages de la plaque support 68 et sont maintenus à leur autre extrémité au moyen de goussets 80 solidaires de la partie supérieure 67' du bâti vertical (figure 8).

A la partie inférieure de la cloche 3 est fixée la vis 73, qui présente un filetage correspondant à celui de l'extrémité des électrodes 64, et qui coopère avec un écrou 74 fixé sur le support creux 72 solidaire d'une plaque de poussée 81 fixée sur le vérin de référence 70.

Le vérin de translation verticale 71 est fixé sur une plaque de réaction 82 solidaire de la partie inférieure 67 du bâti vertical et logeant deux colonnes 83, dont l'extrémité supérieure est maintenue au moyen de supports solidaires du bâti, et qui servent à empêcher la giration de l'écrou 74 au moyen de la plaque de poussée 81 et du support creux 72, la plaque 81 servant, en outre, de support à des freins à excentrique 84 agissant sur les colonnes 83.

La vis 73, coopérant avec l'écrou 74, est traversée par des alésages coaxiaux et est reliée à un raccord tournant 85 à orifices multiples, logé dans le support creux 72, relié à une pompe hydropneumatique 95 fixée sur la plaque 81, et guidé dans ledit support 72, sans possibilité de rotation, grâce à une tige 86 fixée sur le raccord 85 et traversant une rainure longitudinale du support 72. A sa partie supérieure, près de son extrémité reliée à la cloche 3, la vis 73 est pourvue de tubulures de sortie 87 sortant radialement et qui longent la paroi extérieure de la cloche 3 pour aboutir aux entrées d'alimentation des organes de commande du mandrin différentiel 69.

La tige 86 est destinée à limiter la course de la vis 73 par action sur des fins de course 88, 89 solidaires du support creux 72.

Les freins 84 sont constitués par un corps, dans lequel est logé un levier 90 à alésage excentré, et par un vérin 91 d'actionnement du levier 90. L'action de ces freins 84 évite qu'une pression trop importante s'exerce sur les extrémités des filets de l'électrode 64 lors des derniers tours de dévissage.

Le vérin de référence 70 est monté sur le vérin de translation verticale 71 avec interposition d'une plaque support 92, qui porte, en outre, une tige 93 traversant la plaque de poussée 81 et portant un fin de course 94 destiné à interrompre l'alimentation du vérin 70 dès que ledit fin de course est actionné, la plaque support agissant, en outre, en position de repos du vérin 71 sur un fin de course 128.

Sur sa génératrice extérieure, la cloche 3 est munie d'une bague soudée 96 qui sert à la fixation d'un ensemble mobile 97 en forme de tambour relié à la cloche 3 par une couronne d'entraînement 98, fixée simultanément à la bague 96 et à une bague mobile d'une couronne à billes 99, dont la partie statique est fixée à la face inférieure de l'ensemble mobile 97.

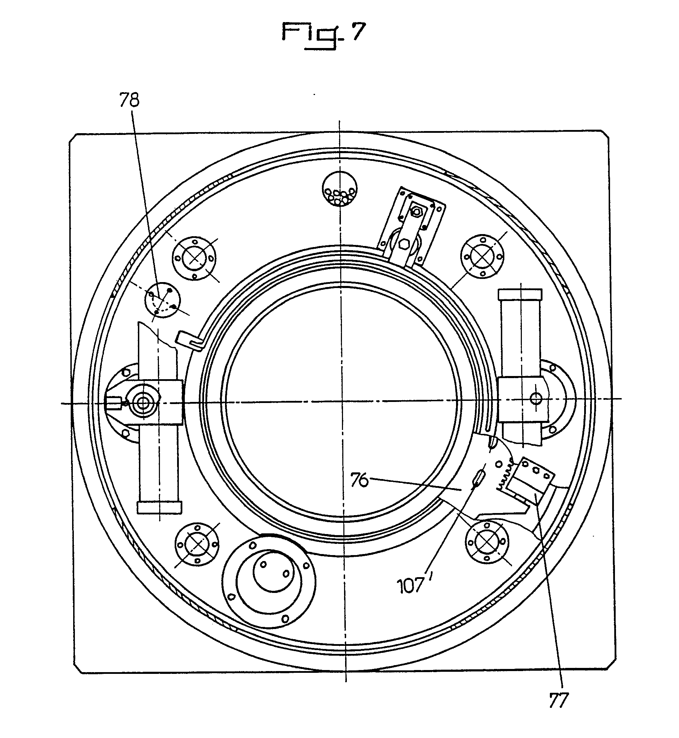

L'ensemble d'étalonnage de la force de vissage de l'électrode 64 est constitué par fléau d'étalonnage 76 disposé au-dessus de la couronne d'entraînement 98, centré sur la bague 96 de la cloche 3, et relié par deux ensembles vis 100—entretoise 101 à un levier de manoeuvre 102 soudé à une douille de guidage 103 portant en son milieu le piston d'un vérin 104, ce piston reposant sur des rondelles élastiques empilées 105 guidées dans l'alésage d'un arbre de guidage 106 soudé sur une plaque de fixation du vérin 104 et relié à la face supérieure de l'ensemble mobile 97, par un capteur de mesure 77 monté sur une équerre solidaire de la face supérieure de l'ensemble mobile 97, et par une butée 78 (figure 7) en forme de demi-lune placée dans un alésage pratiqué dans la face supérieure de l'ensemble mobile 97, le méplat de la butée 78 étant positionné dans le plan du piston du capteur 77 passant par le centre de la cloche 3, capteur 77 et butée 78 étant diamétralement opposés.

Le fléau 76 comporte deux branches et est pourvu sur une génératrice de douze boutonnières 107' dans lesquelles s'engagent lors de l'étalonnage, trois tenons 107 fixés sur la couronne d'entraînement 98 (figures 5 et 7).

L'ensemble mobile 97 est muni, en outre, de quatre alésage équidistants traversant sa plaque de fond, et dans lesquels sont maintenus des coussinets autolubrifiants 108 de passage des axes 79 servant au guidage de l'ensemble 97 dans son mouvement de translation en commun avec la cloche 3, et à absorber les réactions radiales dues aux effets moteurs.

Sur la face supérieure de l'ensemble mobile 97 sont disposés, en outre, d'une part, un moteur pneumatique 113 d'entraînement de la cloche 3 au moyen de la couronne d'entraînement 98 pour le vissage des électrodes 64, ainsi que des vérins rotatifs 108 de vissage final des électrodes 64 par l'intermédiaire d'embrayage 109, et, d'autre part, une entretoise 110 portant sur son flasque supérieure une couronne à billes 111 reliée à la cloche 3 par des tenons 112 assurant le guidage de la cloche 3. Ces tenons 112 évitent, par ailleurs, de devoir réaliser un ajustage rigoureux de l'écartement des couronnes à billes 111 et 99.

Le mandrin différentiel 69 est constitué par un plateau 114 fixé à la cloche 3 et portant sur sa face supérieure des supports 115, dans lesquels coulissent des cylindres creux 116 portant à une de leurs extrémités des mors basculants 117, par des vérins hydrauliques 118, logés dans les alésages des cylindres 116, alimentés par la pompe hydropneumatique 95 à travers le raccord tournant 85, et solidaires de plaques 119 boulonnées sur les supports 115 et absorbant la poussée des vérins, et par des axes 120 fixés chacun à un cylindre 116 et traversant des rainures prévues dans le plateau 114 ainsi que dans la base des supports 115.

La came de centrage 75 est montée sous le plateau 114, est centrée sur la cloche 3, et est munie d'alvéoles en forme de rampes 121 (figure 8), sur sa face inférieure étant soudés, d'une part, deux arrêts 122 destinés à coopérer avec des butées mobiles 123 actionnées par des vérins 124 et montées sur le flasque supérieur de l'entretoise 110, et, d'autre part, des tenons 125 de fixation d'une extrémité de ressorts de rappel 126, dont l'autre extrémité est reliée à des tenons 127 solidaires de la cloche 3, les ressorts 126 assurant le dégagement de la came 75 après retrait des butées mobiles 123.

La partie supérieure 67' du bâti vertical est munie, en outre, d'une butée fixe 129 de fin de course de rentrée de la cloche 3, et d'une butée réglable 130 de fin de course de sortie de la cloche 3, coopérant dans ces positions extrêmes avec un fin de course 131 solidaire de l'ensemble mobile 97.

Les éléments d'actionnement et de serrage de la machine sont gérés par un circuit de commande pneumatique constitué par un bouton de mise en marche 132, par des distributeurs 133 et 134 d'alimentation du vérin de référence 70, par le fin de course 94 commandant le distributeur 134 et un distributeur 135 d'alimentation du vérin de translation verticale 71, à travers une temporisation 136, deux distributeurs 137, 138, la temporisation 136 prenant en compte l'accélération de la montée de la cloche 3 avec les dispositifs y reliés au moyen d'un pressostat différentiel 139, par un distributeur 140 commandé par le pressostat 139, par une cellule 141 fonctionnant en soupape de sécurité à pression différentielle, et par des soupapes de sécurité 142 et 143.

Cette commande pneumatique fonctionne de la manière suivante:

Par actionnement du bouton de mise en marche 132, le distributeur 133 est mis en position d'ouverture et alimente, à travers le distributeur 134 le vérin 70 pour l'amener en contact avec le fin de course 94, qui commande la fermeture du distributeur 134 et l'arrêt de l'alimentation du vérin 70, ainsi que l'ouverture du distributeur 135. Ce dernier alimente alors le vérin 71, et le fin de course 94 ferme les distributeurs 137 et 138 à travers la temporisation 136. Cette dernière prend en compte la force d'accélération de la montée de la cloche 3 avec l'ensemble mobile 97, de part et d'autre de la membrane du pressostat différentiel 139.

Le contact entre deux électrodes à connecter provoque une surpression dans le vérin 70 à une des entrées du pressostat 139, et le signal délivré par ce dernier commande la fermeture du distributeur 140, l'ouverture du distributeur 138 et l'alimentation du moteur de vissage 113 entraînant la cloche 3.

En cas du surpression résultant d'un décalage angulaire des entrées des filets au moment du vissage, la cellule 141 évacue l'excédent d'air du vérin 70 en fonctionnant en soupape de sécurité à pression différentielle. En fin de cycle de vissage, le fin de course 88 commande la vidange des vérins 70 et 71, par mise à l'ouverture des distributeurs 133, 134, 135, 140 et 137.

Grâce à ce circuit de commande, l'arrêt de la montée de l'ensemble mobile 97 avec la cloche 3 peut être réalisé indépendamment du poids de l'électrode et du point de rencontre de deux électrodes à visser, dans la limite de la course de l'ensemble 97.

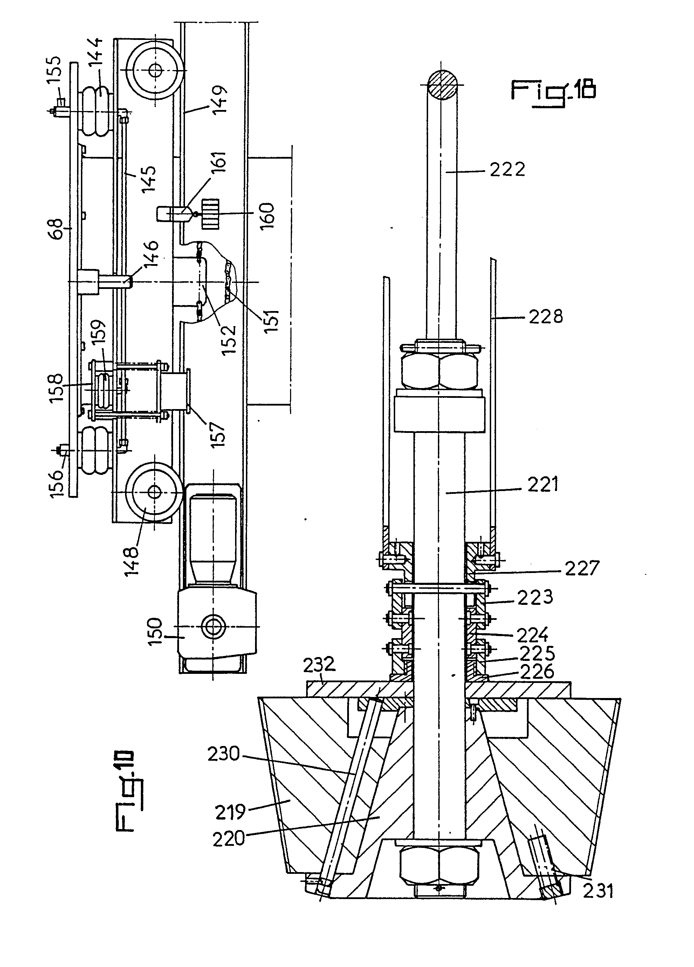

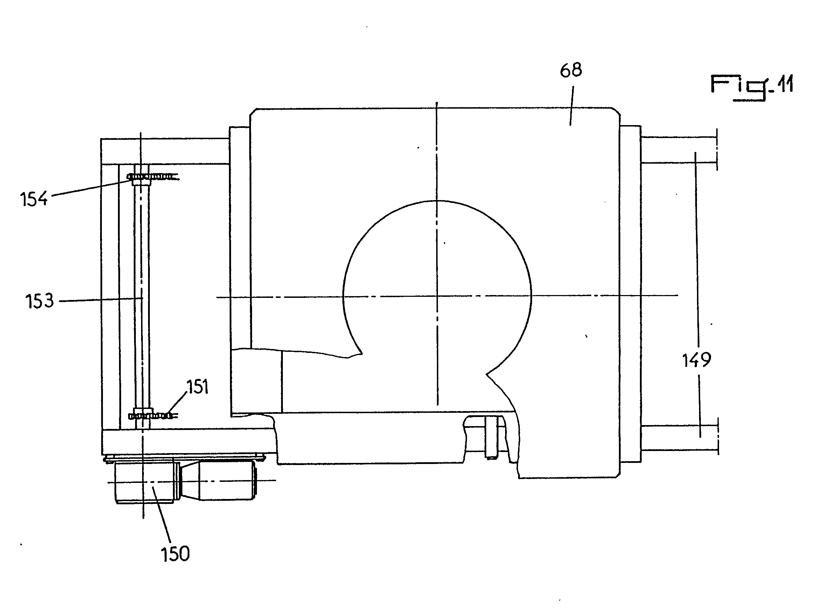

Conformément à une autre caractéristique de l'invention, la machine est montée, par l'intermédiaire de la plaque support 68, de coussins flexibles 144 remplis d'un liquide, reliés entre eux par des conduites 145, et fixés à la plaque 68, et de butées 146 solidaires de la plaque 68, sur un chariot de transport constitué par un cadre en cornières 147 équipé de galets de roulement 148, ce chariot étant déplaçable sur un chemin de roulement formé par des rails 149, au moyen d'un motoréducteur à arbre creux 150, de chaînes 151 reliées par leurs extrémités à une patte 152 solidaire du chariot, et d'arbres d'entraînement et de renvoi 153 munis de roues à chaînes 154 (figures 10 et 11).

Les coussins 144 sont destinés à corriger les défauts d'alignement éventuels, et la flasque supérieur de l'un des coussins est muni d'un robinet 155 de remplissage de l'ensemble des coussins, les flasques des autres coussins étant munis de vis de purge d'air 156.

Les butées 146 coopèrent avec des alésages prévus dans les ailes des cornières 147 formant le chariot, et limitent la hauteur minimale de l'écartement entre la plaque support 68 et le chariot grâce à une épaulement prévu à cet effet sur chaque butée, ainsi que l'angle de torsion de la machine sur les coussins 144.

De part et d'autre du chariot, et parallèlement au chemin de roulement 149 sont fixés des freins destinés à absorber les forces de réaction dues au vissage final de l'électrode, chaque frein étant constitué par une mâchoire 157, dont le profil de la partie freinante est adapté au profil du chemin de roulement 149, par une plaque de pression 158 reliée à la mâchoire 157 par deux tiges traversant l'aile supérieure de la cornière 147 correspondante du chariot, par un vérin souple 159 intercalé entre l'aile de la cornière 147 et la plaque de pression 158 et assurant la fermeture du frein, et par des ressorts de rappel montés sur les tiges de liaison de la mâchoire 157 et de la plaque 158 assurant la sécurité d'ouverture de la mâchoire 157.

Le chemin de roulement 149 est constitué par des rails profilés reliés entre eux aux extrémités au moyen de profilés en U (figure 11), les arbres d'entraînement et de renvoi 153, sur lesquels sont clavetées les roues à chaînes 154, étant montés près des extrémités desdits rails, et l'un des arbres 153 étant entraîné par le motoréducteur 150.

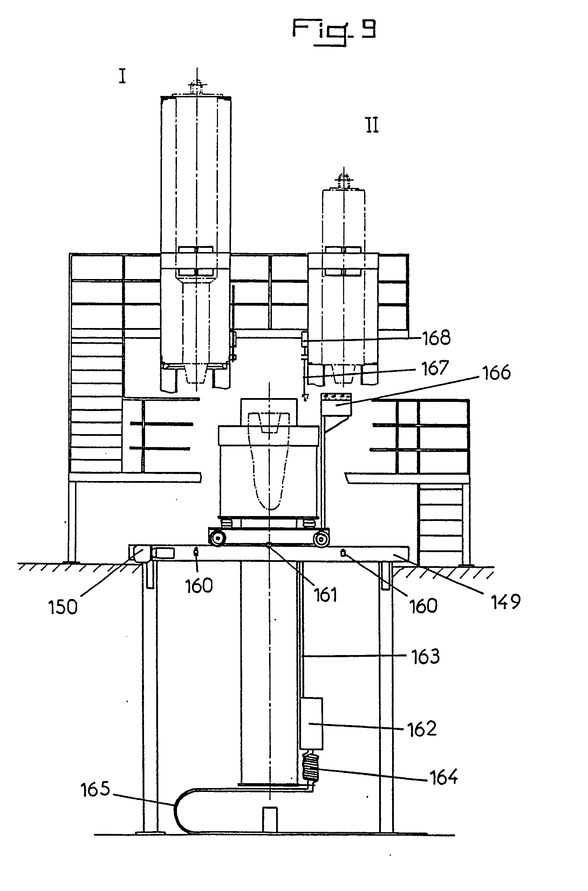

La figure 9 représente, un élévation latérale, un poste de chargement d'électrodes, dans lequel la machine est montée sur son chariot de manière déplaçable entre deux postes de montage et ses déplacements sont contrôlés au moyen de fins de course 160 disposés chacun dans l'axe d'un poste de montage et fixés sur le flanc d'un rail du chemin de roulement 149, ces fins de course coopérant, dans les positions extrêmes du chariot, avec une came 161 solidaire de ce dernier et alignée avec l'axe de la cloche 3, le contact entre la came 161 et l'un des fins de course 160 ayant pour effet de couper l'alimentation du motoréducteur 150 et d'actionner les freins.

Le long de la partie inférieure 67 du bâti vertical est montée une armoire de commande 162 reliée à l'ensemble mobile 97 par deux tubes de guidage 163 solidaires dudit ensemble 97 et traversant la plaque support 68, les tubulures d'alimentation fixées à la base de la machine étant reliées à l'armoire 162 par des tubes souples en forme de ressort 164.

Les câbles et tuyauteries d'alimentation de la machine, fixés à la base de celle-ci, sont logés dans une chaîne porte-câbles 165 également fixée à cette base et suivant le mouvement de translation de la machine.

A la partie supérieure de cette dernière, monté sur le chariot, est prévu un pupitre de commande 166 facilement accessible à un opérateur et comportant tous les instruments de manoeuvre et de contrôle nécessaires.

Pour assurer le nettoyage de la face frontale et du filetage des électrodes 64 pendant le transfert d'un poste de montage à l'autre, il est prévu des soufflettes 167 fixées au bâti de ces postes au moyen de plaques 168, ces soufflettes étant commandées en déplacement, de manière connue en soi, et leur action de soufflage étant déterminée en durée par une temporisation, dont le déclenchement provoque l'arrêt du flux d'air et la remontée des soufflettes.

La machine conforme à l'invention fonctionne de la manière suivante:

Après refroidissement, l'électrode 64 munie de sa pointe en graphite est introduite dans la machine placée à cet effet dans l'axe du poste de montage I. Pour dévisser la pointe, l'opérateur actionne, sur le pupitre de commande 166, une manette de commande de dévissage et le bouton de mise en marche 132, de sorte que les vérins 70 et 71 sont alimentés, assurant la montée de l'ensemble mobile 97 guidé sur les axes 79. Le cylindre de guidage 183 s'engage alors dans l'alésage de la couronne de guidage du poste de montage, et, lorsque le fin de course 131 touche la butée réglable 130, la montée de la cloche 3 et de l'ensemble 97 est arrêtée par coupure de l'alimentation des verins 70 et 71, tandis que les vérins 91 d'actionnement des freins 84 sont alimentés. Le fin de course 131 commande simultanément l'alimentation des vérins 118 du mandrin différentiel 69 au moyen de la pompe hydropneumatique 95. Dès que la pression de serrage de l'électrode 64 est atteinte, un pressostat monté sur la conduite d'alimentation des vérins 118 délivre un signal de fermeture du frein 157 à 159 et de commande d'engagement des embrayages 109, ce pressostat actionnant également, après temporisation, les vérins rotatifs 108, de préférence à deux reprises pour assurer un bon décollement de la pointe.

Après cet actionnement des vérins 108, une came 169 solidaire de leur axe entre en contact avec un fin de course 170, qui commande la mise en marche du moteur 113, qui entraîne la cloche 3 en rotation dans le sens du dévissage. A l'arrivée en fin de dévissage, la tige 86 entre en contact avec le fin de course 89, qui commande l'arrêt du moteur 113, l'ouverture des freins 84, et la vidange des vérins 70 et 71, le fin de course 128 actionné par la plaque support 92 commandant l'ouverture des mâchoires de freins 157 du chariot après retour du vérin 71 en position de départ.

L'opérateur actionne alors une manette de translation provoquant la mise en service des soufflettes 167 et l'alimentation du motoréducteur 150 pour le transfert de l'ensemble vers le poste II. Dès que la came 161 entre en contact avec le fin de course 160 placé dans l'axe vertical dudit poste II, le motoréducteur 150 est arrêté et les freins du chariot sont actionnés.

A ce moment l'opérateur commande la position vissage et procède à l'étalonnage du couple en alimentant le vérin 104, qui fait descendre le fléau 76, par l'intermédiaire du levier 102, dans l'axe du capteur de mesure 77. Les embrayages 109 sont alors fermés, les vérins 108 sont actionnés, et les ergots 107, fixés sur la couronne d'entraînement 98, s'engagent dans les boutonnières 107' du fléau 76, de sorte que ce dernier est entraîné en rotation et est amené en contact avec le capteur 77 et la butée 78.

La valeur du couple de serrage est obtenue par réglage de la pression des vérins 108 au moyen d'un régulateur de pression, connu en soi, prévu sur le pupitre de commande 166. Cette valeur est également visualisée sur le cadran d'un manomètre du pupitre 166, et la valeur du couple ainsi définie est affichée sous forme de valeur de réglage d'un contact de déclenchement sur un autre manomètre. Après cet étalonnage, l'opérateur coupe l'alimentation des vérins rotatifs 108 et provoque l'ouverture des embrayages 109 ainsi que la remontée du fléau 76, puis il actionne le bouton de mise en marche 132 provoquant l'alimentation du vérin de référence 70, et, après actionnement du fin de course 94 l'arrêt de l'alimentation du vérin 70 et la mise sous pression du vérin 71, qui poursuit la montée de la cloche 3, la pression de référence étant mise en mémoire dans le pressostat différentiel 139.

Le contact entre les électrodes à visser 64 crée une surpression dans le vérin de référence 70, transmise au pressostat 139, qui délivre un signal de sortie coupant l'alimentation du vérin 71 et commandant la mise en route du moteur de vissage 113 entraînant la cloche 3. A la fin du vissage, un pressostat monté sur la conduite d'alimentation du vérin 113 coupe l'alimentation de ce dernier, commande la fermeture des freins 157 à 159 du chariot, et l'engagement des embrayages 109, puis, après temporisation, l'actionnement des vérins rotatifs 108 pour l'obtention du couple de serrage final.

Dès que ce couple est atteint, le manomètre de contact délivre un signal arrêtant l'alimentation des vérins 108 et commandant, après temporisation, l'ouverture des embrayages 109, cette temporisation actionnant également le retrait des mors 117 au moyen des vérins 118, ainsi que la vidange des vérins 70 et 71 entraînant la descente de la cloche 3. La vidange totale du vérin 71 a, en outre, pour effet d'amener la plaque support 92 en contact avec le fin de course 128, qui provoque l'ouverture des mâchoires de frein 157 agissant sur le chemin de roulement 149.

La nouvelle électrode avec sa pointe est introduite dans la machine à rabouter au moyen d'un pont roulant. Lorsque la face frontale supérieure de l'électrode est à ras du cylindre du guidage 183, l'opérateur commande une opération de vissage sur le pupitre 166 et provoque, d'une part, une alimentation temporisée à basse pression du moteur 113, qui met en rotation la cloche 3, et, d'autre part, la sortie des butées mobiles 123, ainsi que l'alimentation, après temporisation, des vérins 118 par l'intermédiaire de la pompe 95.

Le contact des butées mobiles 123 avec les butées fixes 122 de la came 75 arrête la rotation de cette dernière et entraîne la translation des cylindres creux 116. Dès que la pression de serrage est atteinte, un pressostat monté sur la conduite d'alimentation des vérins 116 commande le dégagement des butées mobiles 123, l'électrode 64 étant alors prête à être transférée au poste I pour y être vissée. Ce cycle de vissage est identique à celui précité.

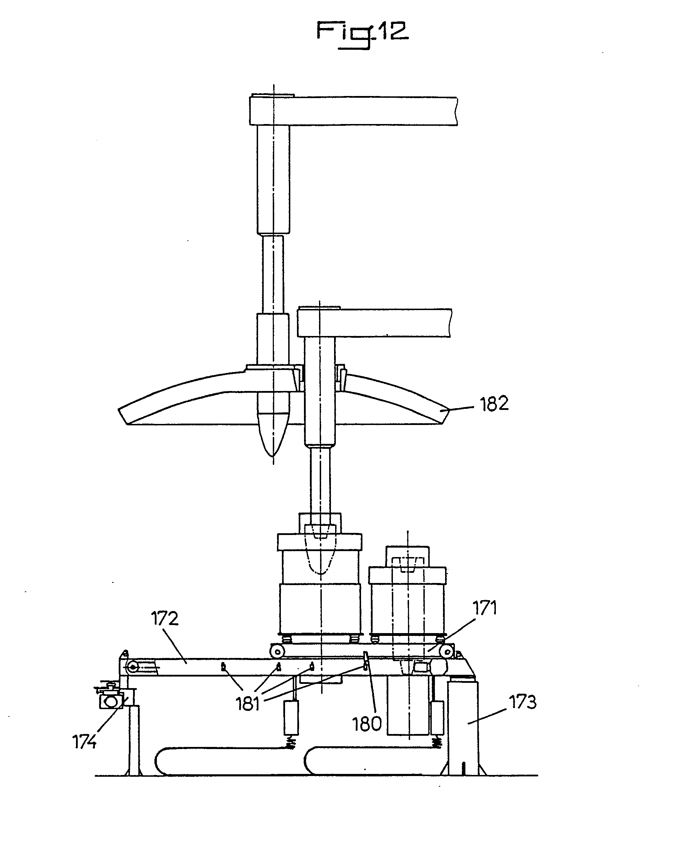

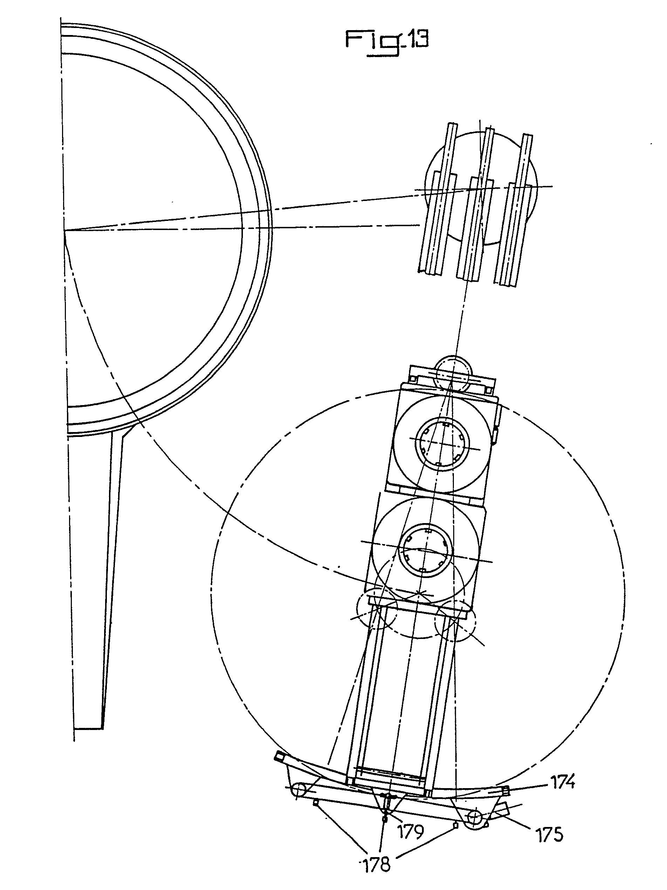

Les figures 12 et 13 représentent une variante d'adaptation de la machine à rabouter par le bas pour une utilisation près d'un four, sans démontage de l'électrode 64. A cet effet, deux machines identiques sont montées côte à côte sur un chariot 171 déplaçable sur un chemin de roulement 172, lui-même pivotable à une extrémité autour d'un montant vertical 173, son autre extrémité étant guidée sur un rail curviligne 174 et entraînée sur ce rail au moyen d'un motoréducteur 175, de roues à chaînes 176 et d'une chaîne 177 reliée à ladite extrémité.

Sur le rail curviligne 174 sont prévus des fins de course 178 permettant l'alignement de l'axe de symétrie du chemin de roulement 172 du chariot 171, en coopération avec une came 179 solidaire dudit chemin de roulement 172 avec l'axe de l'électrode à dévisser ou à rabouter (figure 13), et l'alignement des machines dans l'axe des électrodes est défini par le contact d'une came 180, solidaire du chariot 171, avec des fins de course 181 placés sur le flanc d'un des rails du chemin de roulement 172. Pour des fours à cuves mobiles, l'ensemble de la machine peut être rendu mobile en vue de son utilisation sous la voûte.

Pour une telle utilisation près d'un four, la cloche 3, affectée à la machine de dévissage et de vissage de la pointe, est à double paroi et comporte avantageusement une isolation intermédiaire ainsi qu'un dispositif d'injection d'air à sa base créant une convexion forcée entre la pointe à dévisser et à visser et la paroi de la cloche, et les supports de mors de ladite machine sont munis d'un circuit de refroidissement alimenté à travers le raccord tournant 85, tandis que la machine servant au vissage d'une électrode 64 comporte les éléments de centrage de ladite électrode, et l'ensemble du dispositif ainsi constitué est protégé du rayonnement de la voûte 182 par une carapace en fibres céramiques, non représentée, fixée au chariot 171 et présentant deux ouvertures au-dessus des cloches 3 de chaque machine.

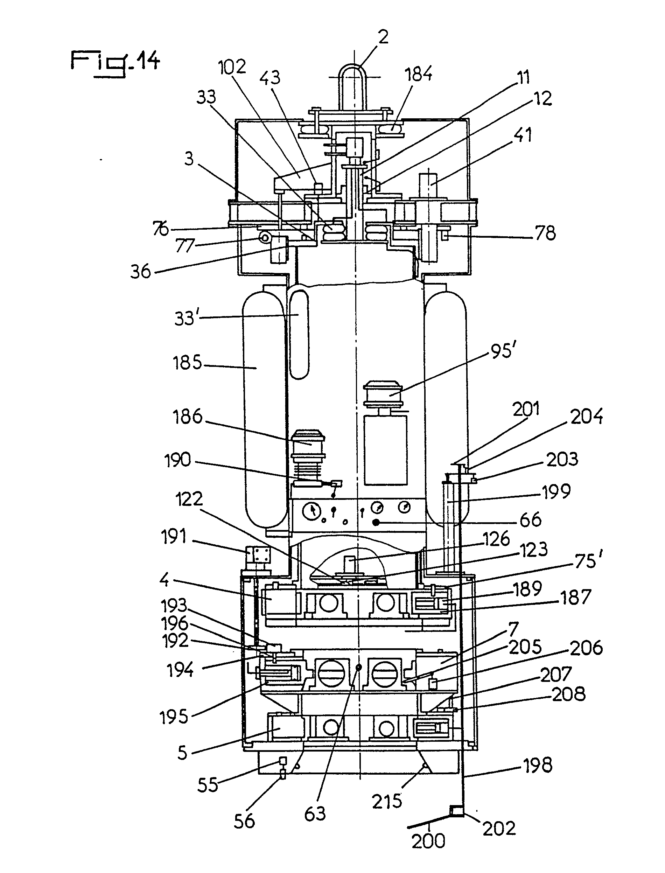

La figure 14 représente une variante de réalisation de l'invention pour l'adaptation de la machine au raboutage d'électrodes par le haut, dans laquelle, le corps 1 de logement de la cloche 3 est relié à l'anse 2 d'accrochage à un crochet de pont roulant au moyen de ressorts pneumatiques 184. Ces derniers assurent une jonction élastique permettant un contact souple avec la colonne d'électrode du four.

Les mandrins de serrage supérieur 4 et inférieur 5, ainsi que le mandrin de centrage 7 sont commandés hydropneumatiquement au moyen d'une pompe 95' à travers un circuit de commande pneumatique, dont l'alimentation est assurée par des réservoirs à air comprimé 185, qui sont remplis périodiquement au moyen d'un surpresseur 186. Ces réservoirs 185 assurent à la machine une autonomie de plusieurs cycles de raboutage.

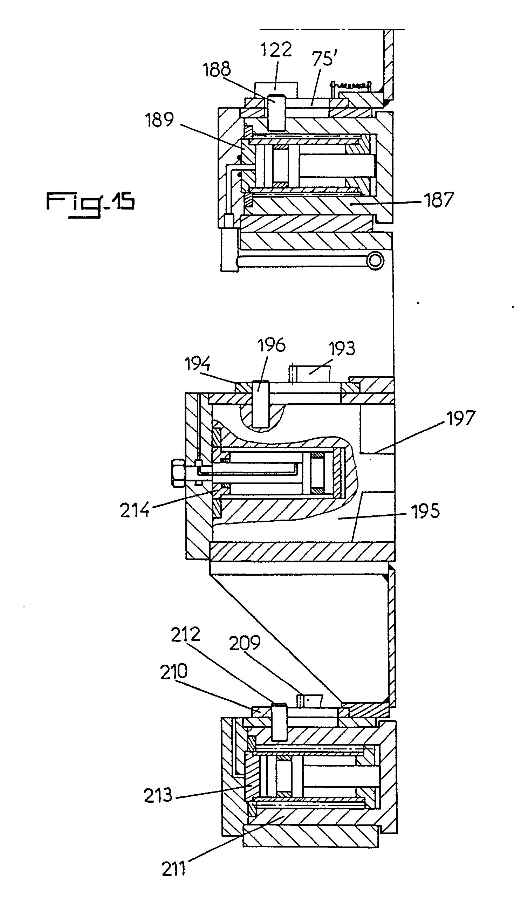

Le mandrin supérieur 4 coopère avec une came de centrage 75', analogue à la came 75 de la machine suivant les figures 5, 7 et 8. Ainsi, la fixation de l'électrode débute après actionnement de la machine au moyen du bouton 66, le frein agissant sur la couronne d'entraînement 36 de la cloche 3 est libéré et le moteur 41 d'entraînement de ladite cloche 3 est alimenté sous faible pression, les vérins 124 des butées mobiles 123 étant alimentés simultanément et actionnant ces dernières pour les amener en contact avec les arrêts 122 solidaires de la came 75'. Ces derniers arrêtent la rotation de la came 75', provoquant la translation des mors 187 du mandrin 4 sous l'action des axes 188 qui glissent le long des rampes de la came 75' (figure 15).

Dès que les mors 187 entrent en contact avec la pièce à serrer, le moteur 41 est bloqué et un pressostat monté sur sa conduite d'alimentation commande la fermeture du frein agissant sur la couronne d'entraînement 36 ainsi que la mise en marche de la pompe hydropneumatique 95'. Les vérins 189 logés dans les alésages des mors 187 sont alors alimentés en vue du serrage final de la pièce (figure 15), et un pressostat monté sur la conduite d'alimentation desdits vérins 187 commande la mise en pression des vérins souples 33 et de leur réservoir tampon 33'. Lorsque la pression dans les vérins souples 33 devient supérieure au poids de l'ensemble, elle provoque la montée de la cloche 3 qui déclenche un fin de course 43 commandant simultanément l'apparition d'un signal de fin de cycle et la fermeture de l'alimentation des vérins 33, assurant ainsi une suspension équilibrée de l'électrode 64 indépendamment de son poids.

Au-dessus de la cloche 3 est prévu, en outre, un ensemble d'étalonnage 76 à 78 de la force de vissage des électrodes, dont le fléau 76 est déplaçable verticalement au moyen d'un levier de manoeuvre 102 auquel il est relié, et qui est actionné par un vérin, ce fléau 76 coopérant, en position d'étalonnage, avec des tenons 107 solidaires de la couronne d'entraînement 36, ainsi qu'avec un capteur de mesure 77 et une butée 78 (figure 14).

Cet ensemble d'étalonnage est identique dans sa constitution et dans son fonctionnement à celui décrit à propos de la machine à rabouter par le bas (figure 5). Dans le cas du raboutage par le haut, un étalonnage peut être effectué après apparition du signal de fin de cycle commandée par le fin de course 43.

Pour le déplacement au-dessus du four, le surpresseur 186, qui est équipé d'un robinet 190 à trois voies avec mise à l'atmosphère, est déconnecté du réseau d'air comprimé, auquel il est relié par une jonction souple, et son robinet 190 est fermé.

Au levage de la machine, la tige 56 de son fin de course temporisé 55 commande simultanément la vérification de la fermeture du frein agissant sur la couronne d'entraînement 36 et la fermeture du mandrin de centrage 7.

Ce dernier est actionné par un vérin rotatif 191, dont l'axe entraîne un pignon 192 solidaire du mandrin 7 et engrenant avec un secteur denté 193 solidaire d'une came 194 assurant la translation des mors 195 du mandrin au moyen d'axes 196 glissant le long des rampes de la came 194 (figures 14 et 15). Ainsi, les mors 195 sont amenés en contact avec l'électrode, et leur partie plane 197 se place sous cette dernière afin d'éviter tout risque de sortie accidentelle de ladite électrode lors du transport.

La machine selon l'invention est pourvue, en outre, d'un axe vertical 198 actionné par un vérin 199 commandé simultanément avec la fermeture du mandrin de centrage 7 par le contact 55 avec interposition d'une temporisation réglable, et axe 198 présentant, d'une part, à son extrémité inférieure une tige 200 inclinée par rapport à l'horizontal et reliée à une butée mobile 201, solidaire de l'autre extrémité de l'axe 198, par l'intermédiaire d'un câble 202, et, d'autre part, à son extrémité supérieure d'une butée d'actionnement d'un contact 203 de commande d'un vérin rotatif relié à l'axe 198 et lui imprimant une rotation d'un arc de cercle afin de placer sa tige de contact 200 dans l'axe de la machine.

La butée 201 actionne, lors de la descente de la machine, dès que la tige 200 touche l'électrode, un interrupteur 204 de mise en service de soufflettes 215 ainsi que l'effacement de la tige 200, par rotation inverse du vérin rotatif d'entraînement de l'axe 198, la fin de course de rotation du vérin commandant la rentrée de l'axe 198 au moyen du vérin 199 par l'intermédiaire d'un contact placé sur le carter dudit vérin rotatif.

Un des mors 195 du mandrin de centrage 7 est muni d'une tige de commande 205 d'un distributeur 206 actionnant, au contact avec la face frontale de l'électrode, un vérin rotatif de fermeture du mandrin de serrage inférieur 5 au moyen d'un axe 207 entraînant un pignon 208 solidaire du mandrin 5 et engrenant avec un secteur denté 209 solidaire d'une came 210, qui assure la translation de mors 211 au moyen d'axes 212 glissant le long des rampes de la came 210, ces mors logeant chacun un vérin hydraulique 213 alimenté, après contact des mors avec l'électrode, par la pompe hydropneumatique 95', commandée par un pressostat monté sur la conduite d'alimentation du vérin rotatif, ce pressostat commandant simultanément l'ouverture du mandrin de centrage 7 et la mise sous pression des vérins hydrauliques 213, logés dans les mors 195, au moyen de la pompe 95'.

Un pressostat monté sur la conduite d'alimentation des vérins 213 commande simultanément l'ouverture du frein agissant sur la couronne d'entraînement 36, ainsi que la mise en marche des soufflettes 63, qui créent un flux d'air au ras des surfaces de contact des électrodes à assembler, et la mise en marche du moteur d'entraînement 41 de la cloche 3, qui effectue en même temps un mouvement de translation vertical grâce à son ensemble vis 11—écrou 12.

Le mode de fonctionnement de la machine en vissage ou en dévissage d'électrode est identique à celui décrit à propos des exemples de réalisation suivant les figures 1 à 4 ou d'une machine à rabouter par le bas.

Pour déplacer verticalement une colonne d'électrodes à l'intérieur d'une pince, il suffit à l'opérateur de provoquer la fermeture du mandrin de centrage 7 et de supprimer les fonctions de vissage ainsi que l'action des soufflettes. La machine est alors déplacée au-dessus du four puis descendue sur la colonne d'électrode. Dès que la tige de commande 205 du distributeur 206 entre en contact avec la face supérieure de l'électrode le mandrin inférieur 5 est fermé, la tige inclinée 200 est sortie au moyen de l'axe 198, et un signal sonore est actionné, l'opérateur commandant alors l'ouverture et la montée de la pince. Lorsque cette dernière entre en contact avec la tige 200, simultanément, un signal sonore prévient l'opérateur de procéder à la fermeture de la pince, et une temporisation est actionnée, à la fin de laquelle le mandrin 5 s'ouvre et actionne un signal de fin de cycle.

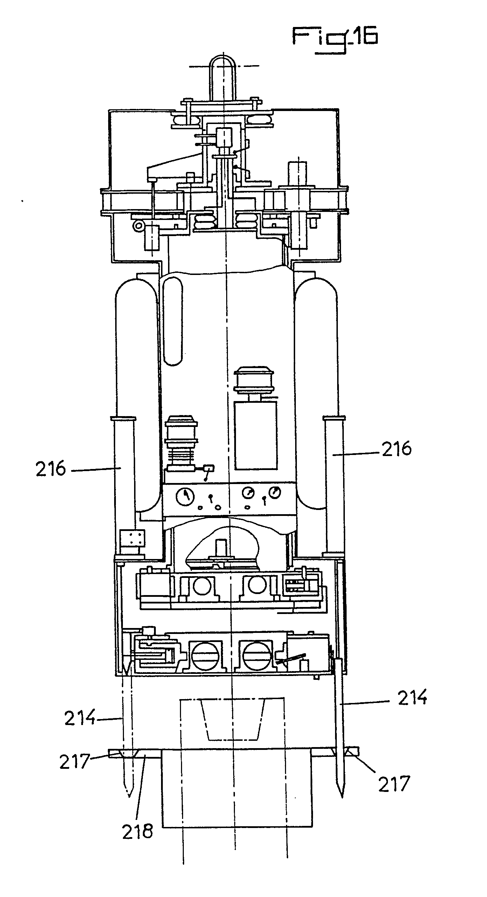

La figure 16 représente une variante de réalisation de l'invention, dans laquelle le mandrin de serrage inférieur 5 est remplacé par une paire de pointes de centrage 214, rétractables au moyen de vérins 216, et coopérant avec des alésages correspondants 217 d'un flasque 218 solidaire du support d'électrode ou de la pince d'électrode.

L'invention a également pour objet un nipple de transport pour électrodes de fours à arc électrique caractérisé en ce qu'il est escamotable et est essentiellement constitué par des mors filetés 219 montés avec possibilité de coulissement sur une rampe conique 220, au moyen d'axes 230 contre l'action de ressorts 231, par un arbre 221 solidaire d'une anse 222 d'accrochage à un crochet de pont roulant, par un ensemble de verrouillage des mors 219 en position de service comprenant une genouillère formée par un levier coudé 223 coopérant avec des biellettes 224 et actionnant un poussoir 225 muni d'une douille de réglage du serrage 226, par une plaque intermédiaire 232

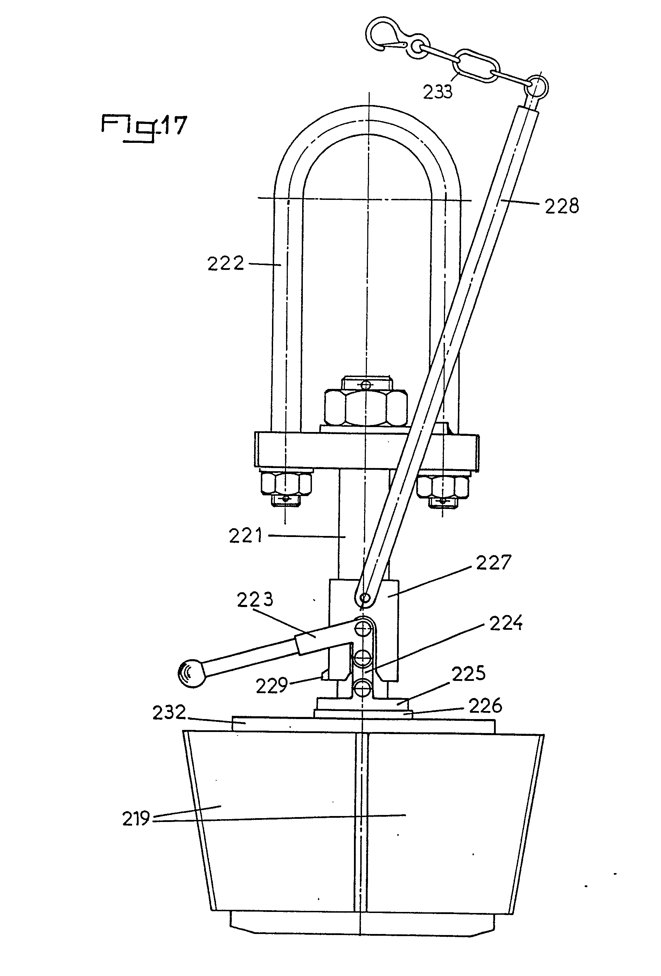

disposée sous le poussoir 225 et par une bague mobile 227 de verrouillage des biellettes 224, pourvue, d'une part, d'une anse de manoeuvre 228 avec chaîne 233 d'accrochage à un maillon de chaîne du pont roulant, et, d'autre part, d'un ergot de déblocage 229 pour le levier 223 de la genouillère (figures 17 et 18).

Avant vissage dans l'électrode, le nipple est armé par appui sur le levier 223, qui pousse, par l'intermédiaire des biellettes 224 et du poussoir 225, sur la plaque intermédiaire 232, qui fait glisser les mors 219 en butée contre la face inférieure de la rampe conique 220 en comprimant les ressorts 231.

Pour le transfert d'une colonne, le nipple est simplement vissé dans le filetage femelle de l'électrode supérieure de la colonne, puis le crochet du pont roulant est passé dans l'anse 222 et la chaîne 233 est reliée à un maillon de la chaîne dudit pont roulant.

La colonne d'électrode peut alors être transférée au niveau du four, puis fixée dans la pince porte-électrode. Après dégagement du crochet du pont roulant de l'anse 222, seule la chaîne 233 reste accrochée à la chaîne du pont roulant, et la remontée de cette dernière a pour effet de tendre ladite chaîne 233 provoquant la montée de la bague mobile 227, dont l'ergot de déblocage 229 soulève le levier 223, de sorte que l'ensemble rampe 220—arbre 221— anse 222 descend avec action simultanée des ressorts 231, provoquant le dégagement des mors 219 et permettant le retrait du nipple.

Un tel nipple de transport permet d'éviter toute intervention humaine au niveau du four, et son utilisation est particulièrement intéressante pour la mise en place des tronçons d'électrode ainsi qu'en combinaison avec la machine à rabouter par le bas.

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention.

**Revendications**

1. Machine à rabouter les électrodes de fours à arc électrique, essentiellement constituée par un corps (1) muni d'une anse (2) d'accrochage à un crochet de pont roulant, par une cloche (3) logée dans le corps (1) et pourvue de deux mandrins de serrage, respectivement supérieur (4) et inférieur (5), d'un mandrin de centrage (7) disposé entre les mandrins de serrage (4 et 5), et par un dispositif (6) d'entraînement en rotation et en translation de la cloche (3) constitué par un ensemble vis (11)—écrou (12) de déplacement en translation de la cloche (3) et par un dispositif (14) d'entraînement en rotation et de freinage, caractérisée en ce que le mandrin supérieur (4) est équipé d'une butée expansible (8) limitant son ouverture, et de pignons (9) d'entraînement de la spirale de serrage des mors (10) escamotables, en ce que le dispositif (6) est munie de moteurs (13) de vissage final de l'électrode, et en ce que l'ensemble des éléments de commande est asservi pneumatiquement.

2. Machine, suivant la revendication 1, caractérisée en ce que le mandrin de centrage (7) est constitué par des mors (15) à épaulement intérieur (15''), qui engrènent par leur face arrière avec une spirale dentée (16) dont les dents coopèrent avec le pignon (17) de l'arbre d'un moteur pneumatique (18), par des flasques (19) et (20) solidaires du corps (1), et servant respectivement de support au moteur (18) et de centrage et de guidage de la spirale dentée (16), et de guidage des mors (15), par un ensemble butée (21)—contact (22) de fin de course d'ouverture des mors (15), et par un ensemble butée (23) tige de commande (24) contact (25) de fin de course d'approche de la machine chargée sur une électrode en service.

3. Machine, suivant la revendication 2, caractérisée en ce que les mors (15) sont pourvus chacun d'une patte (15') en saillie en direction du mandrin de serrage inférieur (5) et inclinée vers l'extérieur par rapport à l'axe de la cloche (3) d'un angle correspondant à l'angle d'inclinaison de la partie filetée d'extrémité de l'électrode, et l'épaulement intérieur (15'') forme une cale de sécurité pour le transport et présente une épaisseur telle que tout contact entre les filets des électrodes à assembler soit évité.

4. Machine, suivant la revendication 1, caractérisé en ce que la butée expansible (8) équipant le mandrin (4) est constituée par des segments circulaires reliés entre eux à la manière de charnières au moyens d'arbres (26) solidaires des mors (10), et recouverts d'un manchon en néoprène, et les pignons (28) d'entraînement de sa spirale de serrage (27), au moyen d'un moteur pneumatique (32), sont chacun en liaison d'entraînement débrayable avec ladite spirale (27) au moyen d'un pignon (9) escamotable par l'intermédiaire d'un vérin (29) et d'une genouillère (30) par pivotement autour d'un arbre (31).

5. Machine, suivant la revendication 1, caractérisée en ce que la vis (11) de l'ensemble vis (11)—écrou (12) de déplacement en translation de la cloche (3) est solidaire de cette dernière par l'intermédiaire de vérins souples (33), reliés à un réservoir tampon (33'), et coopérant avec un tambour (34) fixé sur un flasque (35) de l'extrémité supérieure de la cloche (3), ce flasque portant une couronne dentée (36) d'entraînement en rotation coopérant avec les moteurs (13) et avec le dispositif (14).

6. Machine, suivant l'une quelconque des revendications 1 et 5, caractérisée en ce que l'écrou (12) est solidaire du corps (1) qui porte, d'une part, les moteurs (13) de vissage final de l'électrode, qui sont sous forme de vérins de couplage (37) munis chacun d'un embrayage à denture (38) et d'un pignon d'entraînement (39) coopérant avec la couronne dentée (36), et, d'autre part, le dispositif d'entraînement en rotation et de freinage (14) de la cloche (3) qui est constitué par un pignon (40) d'entraînement de la cloche (3), solidaire d'un moteur pneumatique (41), et par un frein (42) interposé entre le moteur (41) et le pignon (40).

7. Machine, suivant l'une quelconque des revendications 1, 5 et 6, caractérisée en ce que l'écrou (12) est muni d'un contact de fin de course (43) détectant le déplacement vertical de la cloche (3) sous l'effet du gonflage des vérins souples (33), qui actionnent le tambour (34), et sur l'arbre de levage (44) solidaire de l'écrou (12) et de l'anse de levage (2) sont prévus des contacts de fin de course haute et basse (45) et (46) de la vis (11), qui coopèrent avec une rondelle (47) solidaire de cette dernière.

8. Machine, suivant l'une quelconque des revendications 1, 5 et 6, caractérisée en ce que l'arbre d'entraînement d'au moins un pignon (39) d'un moteur (13) est muni d'une came (48) coopérant avec un contact de fin de course (49) de limitation de la rotation du pignon (39), qui est en circuit avec un pressostat temporisé taré à une valeur légèrement inférieure à celle du couple de serrage nécessaire entre les électrodes, et qui actionne après temporisation l'embrayage (38) du vérin (37) et commande le retour de ce dernier si ledit couple n'est pas atteint, en vue d'une répétition du serrage jusqu'à atteinte du couple.

9. Machine, suivant l'une quelconque des revendications 1 et 5, caractérisée en ce que l'alimentation en air comprimé des vérins souples (33) et du réservoir tampon (33') s'effectue à travers une conduite coaxiale de la vis (11) qui est munie d'un raccord rotatif (50) relié à la conduite d'alimentation en air comprimé principale, qui est raccordée, soit à un compresseur prévu sur le pont roulant au moyen d'une conduite souple, soit à un réservoir sous pression prévu dans ou sur le corps (1).

10. Machine, suivant l'une quelconque des revendications 1 et 4, caractérisée en ce que le mandrin supérieur (4), est équipé d'un contact de fin de course escamotable (51) actionné par un vérin (52), et commandant l'ouverture du mandrin inférieur (5) ainsi qu'une temporisation de remontée de la cloche (3) à son point de départ après une opération de vissage d'électrode.

11. Machine, suivant la revendication 1, caractérisée en ce que le mandrin inférieur (5) est muni, d'une part, sur la périphérie de sa partie de guidage (53), de soufflettes (54) à durée de fonctionnement limitée par temporisation, et dont la mise en marche est commandée par un interrupteur temporisé (55) actionné par une tige (56) en saillie sur la partie inférieure du mandrin (5), et, d'autre part, d'un contact (57) de fin de course d'ouverture des mors (58) coopérant, au moyen d'une tige (59) avec une came (60) solidaire d'un mors (58), les mors (58) étant pourvus, en outre, chacune d'une butée (61) coopérant avec un évidement correspondant d'un flasque de guidage (62).

12. Machine, suivant l'une quelconque des revendications 1, 3, 5, 7 et 10, caractérisée en ce que la cloche (3) est pourvue sur sa périphérie, au niveau des épaulements (15'') des mors (15) du mandrin de centrage (7), de soufflettes (63), dont l'actionnement est commandé par l'intermédiaire d'une temporisation par le contact (22) de fin de course d'ouverture des mors, et dont la durée de fonctionnement est règlée par une autre temporisation.

13. Machine, suivant l'une quelconque des revendications 1 à 12, caractérisé en ce que pour le raboutage des électrodes par le bas, elle est essentiellement constituée par une cloche (3), logée dans un bâti vertical en deux éléments inférieur (67) et supérieur (67') reliés entre eux par une plaque support (68), et munie près de son ouverture d'un mandrin différentiel unique (69) à commande hydropneumatique, par un ensemble vérin de référence (70)—vérin de translation verticale (71) agissant sur la partie inférieure de la cloche (3) par l'intermédiaire d'une plaque de poussée (81), d'un support creux (72) et de l'ensemble vis (73)—écrou (74) de vissage de l'électrode (64), par une came de centrage (75) centrée sur la cloche (3) et coopérant avec le mandrin différentiel (69), et par un ensemble (76, 77, 78) d'étalonnage de la force de vissage de l'électrode (64) monté dans la partie supérieure (67') du bâti vertical.

14. Machine, suivant la revendication 13, caractérisé en ce que le vérin de translation verticale (71) est fixé sur une plaque de réaction (82) solidaire de la partie inférieure (67) du bâti vertical et logeant deux colonnes (83), dont l'extrémité supérieure est maintenue au moyen de supports solidaires du bâti, et qui servent à empêcher la giration de l'écrou (74) au moyen de la plaque de poussée (81) et du support creux (72), la plaque (81) servant, de support à des freins à excentrique (84) agissant sur les colonnes (83).

15. Machine, suivant la revendication 13, caractérisée en ce que la vis (73), coopérant avec l'écrou (74), est traversée par des alésages coaxiaux et est reliée à un raccord tournant (85) à orifices multiples, logé dans le support creux (72), relié à une pompe hydropneumatique (95) fixée sur la plaque (81), et guidé dans ledit support (72), sans possibilité de rotation, grâce à une tige (86) fixée sur le raccord (85) et traversant une rainure longitudinale du support (72), la vis (73) étant pourvue, à sa partie supérieure, près de son extrémité reliée à la cloche (3), de tubulures de sortie (87) sortant radialement et qui longent la paroi extérieure de la cloche (3) pour aboutir aux entrées d'alimentation des organes de commande du mandrin différentiel (69).

16. Mandrin, suivant la revendication 13, caractérisée en ce que le vérin de référence (70) est monté sur le vérin de translation verticale (71) avec interposition d'une plaque support (92), qui porte une tige (93) traversant la plaque de poussée (81) et portant un fin de course (94) destiné à interrompre l'alimentation du vérin (70), dès que ledit fin de course est actionné, la plaque support agissant en position de repos du vérin (71) sur un fin de course (128).

17. Machine, suivant la revendication 13, caractérisée en ce que sur sa génératrice extérieure, la cloche (3) est munie d'une bague soudée (96) qui sert à la fixation d'un ensemble mobile (97) en forme de tambour relié à la cloche (3) par une couronne d'entraînement (98) fixée simultanément à la bague (66) et à une bague mobile d'une couronne à billes (99), dont la partie statique est fixée à la face inférieure de l'ensemble mobile (97).

18. Machine, suivant la revendication 13, caractérisée en ce que l'ensemble d'étalonnage de la force de vissage de l'électrode (64) est constitué par un fléau d'étalonnage (76) disposé au-dessus de la couronne d'entraînement (98), centré sur la bague (96) de la cloche (3), et relié par deux ensembles vis (100)—entretoise (101) à un levier de manoeuvre (102) soudé à une douille de guidage (103) portant en son milieu le piston d'un vérin (104), ce piston reposant sur des rondelles élastiques empilées (105) guidées dans l'alésage d'un arbre de guidage (106) soudé sur une plaque de fixation du vérin (104) et relié à la face supérieure de l'ensemble mobile (97), par un capteur de mesure (77) monté sur une équerre solidaire de la face supérieure de l'ensemble mobile (97), et par une butée (78) en forme de demi-lune placée dans un alésage pratiqué dans la face supérieure de l'ensemble mobile (97), le méplat de la butée (78) étant positionné dans le plan du piston du capteur (77) passant par le centre de la cloche (3), capteur (77) et butée (78) étant diamétralement opposés, et le fléau (76) comportant deux branches et étant pourvu sur une génératrice de douze boutonnières (107') dans lesquelles s'engagent, lors le l'étalonnage, trois tenons (107) fixés sur la couronne d'entraînement (98).

19. Machine, suivant l'une quelconque des revendications 17 et 18, caractérisée en ce que sur la face supérieure de l'ensemble mobile (97) sont disposés, d'une part, un moteur pneumatique (113) d'entraînement de la cloche (3) au moyen de la couronne d'entraînement (98) pour le vissage des électrodes (64), ainsi que des vérins rotatifs (108) de vissage final des électrodes (64) par l'intermédiaire d'embrayages (109), et, d'autre part, une entretoise (110) portant sur son flasque supérieur une couronne à billes (111) reliée à la cloche (3) par des tenons (112) assurant le guidage de la cloche (3).

20. Machine, suivant l'une quelconque des revendications 13 et 15, caractérisée en ce que le mandrin différentiel (69) est constitué par un plateau (114) fixé à la cloche (3) et portant sur sa face supérieure des supports (115), dans lesquels coulissent des cylindres creux (116) portant à une de leurs extrémités des mors basculants (117), par des vérins hydrauliques (118) logés dans les alésages des cylindres (116), alimentés par la pompe hydropneumatique (95) à travers le raccord tournant (85), et solidaires de plaques (119) boulonnées sur les supports (115) et absorbant la poussée des vérins, et par des axes (120) fixés chacun à un cylindre (116) et traversant des rainures prévues dans le plateau (114) ainsi que dans la base des supports (115).

21. Machine, suivant l'une quelconque des revendications 13 et 20, caractérisée en ce que la came de centrage (75) est montée sous le plateau (114), est centrée sur la cloche (3), et est munie d'alvéoles en forme de rampes (121), sur sa face inférieure étant soudés, d'une part, deux arrêts (122) destinés à coopérer avec des butées mobiles (123) actionnées par des vérins (124) et montées sur le flasque supérieur de l'entretoise (110), et, d'autre part, des tenons (125) de fixation d'une extrémité de ressorts de rappel (126), dont l'autre extrémité est reliée à des tenons (127) solidaires de la cloche (3), les ressorts (126) assurant le dégagement de la came (75) après retrait des butées mobiles (123).

22. Machine, suivant l'une quelconque des revendications 13 à 21, caractérisée en ce que les éléments d'actionnement et de serrage de la machine sont gérés par un circuit de commande pneumatique constitué par un bouton de mise en marche (132), par des distributeurs (133 et 134) d'alimentation du vérin de référence (70), par le fin de course (94) commandant le distributeur (134) et un distributeur (135) d'alimentation du vérin de translation verticale (71), à travers une temporisation (136), deux distributeurs (137, 138), la temporisation (136) prenant en compte l'accélération de la montée de la cloche (3) avec les dispositifs y reliés au moyen d'un pressostat différentiel (139), par un distributeur (140) commandé par le pressostat (139), par une cellule (141) fonctionnant en soupape de sécurité à pression différentielle, et par des soupapes de sécurité (142 et 143).

23. Machine, suivant l'une quelconque des revendications 13 à 22, caractérisée en ce qu'elle est montée, par l'intermédiaire de la plaque support (68), de coussins flexibles (144) remplis d'un liquide, reliés entre eux par des conduites (145), et fixés à la plaque (68), et de butées (146) solidaires de la plaque (68), sur un chariot de transport constitué par un cadre en cornières (147) équipé de galets de roulement (148), ce chariot étant déplaçable sur un chemin de roulement formé par des rails (149) au moyen d'un motoréducteur à arbre creux (150), de chaînes (151) reliées par leurs extrémités à une patte (152) solidaire du chariot, et d'arbres d'entraînement et de renvoi (153) munis de roues à chaînes (154).

24. Machine, suivant la revendication 23, caractérisée en ce que de part et d'autre du chariot, et parallèlement au chemin de roulement (149), sont fixés des freins destinés à absorber les forces de réaction dues au vissage final de l'électrode, chaque frein étant constitué par une mâchoire (157), dont le profil de la partie freinante est adapté au profil du chemin de roulement (149), par une plaque de pression (158) reliée à la mâchoire (157) par deux tiges traversant l'aile supérieure de la cornière (147) correspondante du chariot, par un vérin souple (159) intercalé entre l'aile de la cornière (147) et la plaque de pression (158), et assurant la fermeture du frein, et par des ressorts de rappel montés sur les tiges de liaison de la mâchoire (157) et de la plaque (158) assurant la sécurité d'ouverture de la mâchoire (157).

25. Machine, suivant l'une quelconque des revendications 23 et 24, caractérisée en ce qu'elle est montée sur son chariot de manière déplaçable entre deux postes de montage et ses déplacements sont contrôlés au moyen de fins de course (160) disposés chacun dans l'axe d'un poste de montage et fixés sur le flanc d'un rail du chemin de roulement (149), ces fins de course coopérant, dans les positions extrêmes du chariot, avec une came (161) solidaire de ce dernier et alignée avec l'axe de la cloche (3), le contact entre la came (161) et l'un des fins de course (160) ayant pour effet de couper l'alimentation de motoréducteur (150) et d'actionner les freins.

26. Machine, suivant l'une quelconque des revendications 23 et 24, caractérisée en ce que deux machines identiques sont montées côte à côte sur un chariot (171) déplaçable sur un chemin de roulement (172), lui-même pivotable à une extrémité autour d'un montant vertical (173), son autre extrémité étant guidée sur un rail curviligne (174) et entraînée sur ce rail au moyen d'une motoréducteur (175), de roues à chaînes (176) et d'une chaîne (177) reliée à ladite extrémité.

27. Machine, suivant la revendication 26, caractérisée en ce que sur le rail curviligne (174) sont prévus des fins de course (178) permettant l'alignement de l'axe de symétrie du chemin de roulement (172) du chariot (171) en coopération avec une came (179) solidaire dudit chemin de roulement (172), avec l'axe de l'électrode à dévisser ou à rabouter, et l'alignement des machines dans l'axe des électrodes est défini par le contact d'une came (180), solidaire du chariot (171), avec des fins de course (181) placés sur le flanc d'un des rails du chemin de roulement (172).

28. Machine, suivant l'une quelconque des revendications 26 et 27, caractérisée en ce que la cloche (3), affectée à la machine de dévissage et de vissage de la pointe, est à double paroi et comporte une isolation intermédiaire ainsi qu'un dispositif d'injection d'air à sa base créant une convexion forcée entre la pointe à dévisser et à visser et la paroi de la cloche, et les supports de mors de ladite machine sont munis d'un circuit de refroidissement alimenté à travers le raccord tournant (85), tandis que la machine servant au vissage d'une électrode (64) comporte les éléments de centrage de ladite électrode, et l'ensemble du dispositif ainsi constitué est protégé du rayonnement de la voûte (182) par une carapace en fibres céramiques, fixée au chariot (171) et présentant deux ouvertures au-dessus des cloches (3) de chaque machine.

29. Machine, suivant l'une quelconque des revendications 1 à 22, caractérisée en ce que, pour le raboutage des électrodes par le haut, le corps (1) de logement de la cloche (3) est relié à l'anse (2) d'accrochage à un crochet de pont roulant par l'intermédiaire de ressorts pneumatiques (184), les mandrins de serrage supérieur (4) et inférieur (5), ainsi que le mandrin de centrage (7) sont à commande hydropneumatique, le mandrin supérieur (4) coopérant avec une came de centrage (75'), une pompe hydropneumatique (95') alimentant lesdits mandrins avec interposition d'un circuit pneumatique de commande, dont l'alimentation est assurée par des réservoirs à air comprimé (185) à remplissage périodique au moyen d'un surpresseur (186).

30. Machine, suivant la revendication 29, caractérisée en ce qu'au-dessus de la cloche (3) est prévu un ensemble d'étalonnage (76 à 78) de la force de vissage des électrodes, dont le fléau (76) est déplaçable verticalement au moyen d'un levier de manoeuvre (102) auquel il est relié, et qui est actionné par un vérin, ce fléau (76) coopérant, en position d'étalonnage, avec des tenons (107) solidaires de la .couronne d'entraînement (36), ainsi qu'avec un capteur de mesure (77) et une butée (78).

31. Machine, suivant l'une quelconque des revendications 29 et 30, caractérisée en ce que le mandrin de centrage (7) est actionné par un vérin rotatif (191), dont l'axe entraîne un pignon (192) solidaire du mandrin (7) et engrenant avec un secteur denté (193) solidaire d'une came (194) assurant la translation des mors (195) du mandrin au moyen d'axes (196) glissant le long des rampes de la came (194), les mors (195) étant ainsi amenés en contact avec l'électrode, et leur partie plane (197) se plaçant sous cette dernière, afin d'éviter tout risque de sortie accidentelle de ladite électrode lors du transport.

32. Machine, suivant l'une quelconque des revendications 29 à 31, caractérisée en ce qu'elle est pourvue, d'un arbre vertical (198) actionné par un vérin .(199) commandé simultanément avec la fermeture du mandrin de centrage (7) par le contact (55) avec interposition d'une temporisation réglable, cet arbre (198) présentant, d'une part, à son extrémité inférieure une tige (200) inclinée par rapport à l'horizontale et reliée à une butée mobile (201), solidaire de l'autre extrémité de l'abre (198), par l'intermédiaire d'un câble (202), et, d'autre part, à son extrémité supérieure une butée d'actionnement d'un contact (203) de commande d'un vérin rotatif relié à l'arbre (198) et lui imprimant une rotation d'un arc de cercle afin de placer sa tige de contact (200) dans l'axe de la machine.

33. Machine, suivant la revendication 32, caractérisée en ce que la butée (201) actionne, lors de la descente de la machine, dès que la tige (200) touche l'électrode, un interrupteur (204) de mise en service de soufflettes (215) ainsi que l'effacement de la tige (200), par rotation inverse du vérin rotatif d'entraînement de l'arbre (198), la fin de course de rotation du vérin commandant la rentrée de l'arbre (198) au moyen du vérin (199) par l'intermédiaire d'un contact placé sur le carter dudit vérin rotatif.

34. Machine, suivant la revendications 31, caractérisée en ce qu'un des mors (195) du mandrin de centrage (7) est muni d'une tige de commande (205) d'un distributeur (206) actionnant, au contact avec la face frontale de l'électrode, un vérin rotatif de fermeture du mandrin de serrage inférieur (5) au moyen d'un arbre (207) entraînant un pignon (208) solidaire du mandrin (5) et engrenant avec un secteur denté (209) solidaire d'une came (210), qui assure la translation de mors (211) au moyen d'arbres (212) glissant le long des rampes de la came (210), ces mors logeant chacun un vérin hydraulique (213) alimenté, après contact des mors avec l'électrode, par la pompe hydropneumatique (95'), commandée par un pressostat monté sur la conduite d'alimentation du vérin rotatif, ce pressostat commandant simultanément l'ouverture du mandrin de centrage (7) et la mise sous pression des vérins hydrauliques (213), logés dans les mors (195), au moyen de la pompe (95).

35. Machine suivant la revendication .29, caractérisée en ce que le mandrin de serrage (5) est remplacé par une paire de pointes de centrage (214), rétractables au moyen de vérins (216), et coopérant avec des alésages correspondants (217) d'un flasque (218) solidaire du support d'électrode ou de la pince d'électrode.

36. Nipple de transport pour électrodes de fours à arc électrique pouvant être adjoint à une machine à rabouter suivant l'une quelconque des revendications 1 à 35, caractérisé en ce qu'il est escamotable et est essentiellement constitué par des mors filetés (219) montés avec possibilité de coulissement sur une rampe conique (220), au moyen d'arbres (230) contre l'action de ressorts (231), par un arbre (221) solidaire d'une anse (222) d'accrochage à un crochet de pont roulant, par un ensemble de verrouillage des mors (219) en position de service comprenant une genouillère formée par un levier coudé (223) coopérant avec des biellettes (224) et actionnant un poussoir (225) muni d'une douille de réglage du serrage (226), par une plaque intermédiaire (232) disposée sous le poussoir (225), et par une bague mobile (227) de verrouillage des biellettes (224), pourvue, d'une part, d'une anse de manoeuvre (228) avec chaîne (233) d'accrochage à un maillon de chaîne du pont roulant, et, d'autre part, d'un ergot de déblocage (229) pour le levier (223) de la genouillère.

**Patentansprüche**

1. Maschine zum Anstücken der Elektroden von Lichtbogenöfen, im wesentlichen bestehend aus einem Gehäuse (1), das mit einer Öse (2) zum Hängen an einen Haken des Laufkrans versehen ist, aus einer Glocke (3), die in dem Gehäuse (1) untergebracht ist u. mit zwei Klemmfuttern versehen ist, je eines oben (4) u. unten (5) u. aus einer Vorrichtung (6) zum Rotationsantrieb der Glocke (3), dadurch gekennzeichnet, daß de Glocke (3) zwischen ihren Klemmfuttern mit einem Zentrierfutter (7) versehen ist, das obere Klemmfutter (4) mit einem ausrückbaren Widerlager (8) zur Begrenzung ihres Öffnens ausgestattet ist u. mit Ritzeln (9) zum Antrieb der Klemmspirale der einziehbaren Spannbacken (10), daß die Vorrichtung (6) zum Rotationsantrieb der Glocke (3) aus einem Satz Schraube (11)—Mutter (12) zur Verschiebung der Glocke (3) besteht, aus Motoren (13) zur Endverschraubung der Elektrode u. aus einer Vorrichtung (14) zum Rotationsantrieb u. zum Bremsen der Glocke (3), wobei alle Steuerteile pneumatisch betrieben werden.

2. Maschine nach Anspruch 1, dadurch gekennzeichnet, daß das Zentrierfutter (7) aus Spannbakken mit innerem Absatz (15″) besteht, die mit ihrer Rückseite in eine Zahnspirale (16) greifen, deren Zähne mit dem Ritzel (17) der Welle eines pneumatischen Motors (18) zusammenwirken, aus Flanschen (19) u. (20), die mit dem Gehäuse (1) verankert sind u. jeweils als Abstützung für den Motor (18) dienen u. als Führung der Spannbacken (15), aus einem Satz bestehend aus Widerlager (21)—Endkontakt (22) zur Öffnung der Spannbacken (15), u. aus einem Satz (23)—Steuerstange (24)—Endkontakt (25), zum Heranfahren der beschickten Maschine auf eine arbeitende Elektrode.

3. Maschine nach Anspruch 2, dadurch gekennzeichnet, daß die Spannbacken (15) je mit einer Klaue (15′) versehen sind, die in Richtung des unteren Klemmfutters (5) hervorspringt u. nach außen geneigt ist im Verhältnis zur Achse der Glocke (3) in einem Winkel, der dem Neigungswinkel des gewindeten Teils des Elektrodenendes entspricht, u. der innere Absatz (15″) eine Sicherheitssperre für den Transport bildet, u. so dick ist, daß jeder Kontakt zwischen den zu montierenden Elektrodengewinden vermieden wird.

4. Maschine nach Anspruch 1, dadurch gekennzeichnet, daß das ausrückbare Widerlager (8), mit dem das Klemmfutter (4) bestückt ist, vorzugsweise aus Kreissegmenten besteht, die untereinander scharnierartig mittels Achsen (26) verbunden sind, die mit den Spannbacken (10) verankert sind u. vorteilhaft mit einer Neoprenmuffe überzogen werden, u. die Ritzel (28) zum Antrieb mit einem pneumatischen Motor der Klemmspirale (27) jeweils in auskuppelbarer Antriebsverbindung mit besagter Spirale (27) über ein Ritzel (9) sind, das einziehbar ist mit Hilfe eines Zylinders (29) u. eines Kniegelenks (30) durch Schwenken um eine Achse (31).

5. Maschine nach Anspruch 1, dadurch gekennzeichnet, daß die Schraube (11) des Satzes Schraube (11)—Mutter (12) zur Verschiebung der Glocke (3), mit letzterer über elastische Zylinder (33) verbunden ist, welche vorteilhaft an einen Pufferbehälter (33′) angeschlossen werden u. mit einer Trommel (34) zusammenwirken, die auf einem Flansch (35) des oberen Endes der Glocke (3) befestigt ist, dieser Flansch trägt einen Zahnring (36) zum Rotationsantrieb, der mit den Motoren (13) u. der Vorrichtung (14) zusammenwirkt.

6. Maschine nach einem der Ansprüche 1 u. 5, dadurch gekennzeichnet, daß die Mutter (12) mit dem Gehäuse (1) verankert ist, das außerdem einerseits die Motoren (13) zur Endverschraubung der Elektrode trägt, die in Form von Schaltzylindern (37) ausgeführt sind, wovon jeder mit einer Klauenkupplung (38) u. mit einem Antriebsritzel (39) versehen ist, das mit dem Zahnring (36) zusammenwirkt, u. andererseits die Vorrichtung zum Rotationsantrieb u. Bremsantrieb (14) der Glocke (3), die aus einem Ritzel (40) zum Antrieb der Glocke (3) besteht, das mit einem pneumatischen Motor (41) verankert ist, u. aus einer Bremse (42), die zwischen dem Motor (41) u. dem Ritzel (40) eingefügt ist.

7. Maschine nach einem der Ansprüche 1, 5 u. 6, dadurch gekennzeichnet, daß die Mutter (12) mit einem Endkontakt (43) versehen ist, der die vertikale Verschiebung der Glocke (3) unter der Pumpwirkung der elastischen Zylinder (33) erfaßt, welche die Trommel (34) betätigen, u. daß auf der Hubwelle (44), die mit der Mutter (12) verankert ist, u. der Tragöse (2) ein oberer (45) u, unterer (46) Endkontakt der Schraube (11) vorgesehen ist, die mit einer Steuerscheibe (47) zusammenwirken, die mit der letzteren fest verbunden ist.

8. Machine nach einem der Ansprüche 1, 5 u. 6, dadurch gekennzeichnet, daß die Antriebswelle mindestens eines Ritzels (39) eines Motors (13) außerdem mit einer Nocke (48) versehen ist, die mit einem Endkontakt (49) zur Begrenzung des Ritzels (39) zusammenwirkt, der mit einem Verzögerungs-Membranschalter in Serie geschaltet ist, der auf einen Wert geeicht ist, welcher etwas unter dem Wert des zwischen den Elektroden notwendigen Verschraubungsmoments liegt, u. der nach Verzögerung die Kupplung (38) des Zylinders (37) betätig u. den Rücklauf des letzteren steuert, wenn besagtes Moment nicht erreicht ist, zur Wiederholung der Verschraubung bis zum Erreichen des Moments.

9. Maschine nach irgendeinem der Ansprüche 1 u. 5, dadurch gekennzeichnet, daß die Druckluftspeisung der elastischen Zylinder (33) u. des Pufferbehälters (33′) über eine coaxiale Leitung der Schraube (11) erfolgt, die mit einem Drehverbindungsstück (50) versehen ist, welches mit der Hauptdruckluftleitung verbunden ist, welche entweder an einen Kompressor mittels einer elastischen Leitung angeschlossen ist, der auf dem Laufkran vorgesehen ist, oder an einen Druckbehälter, der in oder auf dem Gehäuse (1) vorgesehen ist.

10. Maschine nach irgendeinem der Ansprüche 1 u. 4, dadurch gekennzeichnet, daß das obere Klemmfutter (4) außerdem mit einem einschwenkbaren Endkontakt (51) ausgestattet ist, der durch einen Zylinder (52) in Gang gesetzt wird, u. die Öffnung des unteren Klemmfutters (5) sowie einen Verzögerungsschalter für den Hub der Glocke (3) zu ihrem Ausgangspunkt nach einem Arbeitszyklus der Elektrodenverschraubung steuert.

11. Maschine nach Anspruch 1, dadurch gekennzeichnet, daß das untere Klemmfutter (5) einerseits an der Peripherie seines Führungsteils (53) mit Düsen (54) versehen ist, deren Laufzeit durch Verzögerung begrenzt ist u. deren Betrieb durch einen Zeitschalter (55) gesteuert wird, der durch einen Schaft (56), der über den unteren Teil des Klemmfutters (5) hinausragt, betätigt wird, u. andererseits mit einem Endkontakt (57) für die Öffnung der Spannbacken (58), mittels eines Schaftes (59) mit einer Nocke (60), die an einer Spannbacke (58) befestigt ist, jede Spannbacke (58) ist außerdem versehen mit einem Widerlager (61), das mit einer Aussparung zusammenwirkt, die als Führungsflansch (62) dient.

12. Maschine nach irgendeinem der Ansprüche 1, 3, 5, 7 u. 10, dadurch gekennzeichnet, daß die Glocke (3) an ihrer Peripherie, in Höhe der Absätze (15'') der Spannbacken (15) des Zentrierfutters (7) mit Düsen (63) versehen ist, deren Betrieb mittels eines Verzögerungsschalters durch den Endkontakt (22) zur Öffnung der Spannbacken in Gang gesetzt wird, u. deren Laufzeit durch einen anderen Verzögerungsschalter je nach Bedarf gesteuert wird.

13. Maschine nach einem der Ansprüche 1—12, dadurch gekennzeichnet, daß sie zum Anstücken der Elektroden von unten im wesentlichen aus einer Glocke (3) besteht, die in einem vertakalen Rahmen aus je einem unteren (67) u. einem oberen (67') Teil sitzt, welche durch eine Stützplatte (68) miteinander verbunden sind, u. an ihrer Öffnung mit einem einzelnen Ausgleichs-Spannfutter (69) mit hydropneumatischer Steuerung ausgestattet ist, aus einem Satz Referenzzylinder (70)—Zylinder zur vertikalen Verschiebung (71), der auf den unteren Teil der Glocke (3) über eine Druckplatte (81) wirkt, aus einem Hohlträger (71) u. dem Satz Schraube (73)—Mutter (74) zur Verschraubung der Elektrode (64), aus einer Zentriernockenscheibe (75), die auf die Glocke (3) zentriert ist u. mit dem Ausgleichs-Spannfutter (69) zusammenwirkt, u. aus einem Satz Eichgeräte (76, 77, 78) zur Eichung der Schraubstärke der Elektrode (64), der auf den oberen Teil (67') des vertikalen Rahmens montiert ist.

14. Maschine nach Anspruch 13, dadurch gekennzeichnet, daß der Zylinder zur vertikalen Verschiebung (71) auf eine Trägerplatte (82) montiert ist, die mit dem unteren Teil (67) des vertikalen Rahmens fest verbunden ist u. zwei Säulen (83) aufnimmt, deren oberes Ende mit zum Rahmen gehörigen Trägern gehalten wird, u. die dazu dienen, die Drehung der Mutter (74) mit Hilfe der Druckplatte (81) u. des Hohlträgers (72) zu verhindern, wobei die Druckplatte (81) außerdem zur Befestigung der exzentrischen Bremsen (84) dient, welche auf die Säulen (83) wirken.

15. Maschine nach Anspruch 13, dadurch gekennzeichnet, daß die Schraube (73), die mit der Mutter (74) zusammenwirkt, von coaxialen Bohrungen durchquert u. an ein Drehverbindungsstück (85) mit Dreifachöffnung angeschlossen wird, das in dem Hohlträger (72) sitzt, u. an eine hydropneumatische Pumpe (95) angeschlossen ist, die auf der Platte (81) befestigt ist, das Drehverbindungsstück (85) wird in dem besagten Hohlträger (72) unverdrehbar geführt, dank eines Schaftes (86), der auf dem Verbindungsstück (85) befestigt ist u. eine Längsrille des Hohlträgers (74) durchquert, die Schraube (73) ist an ihrem oberen Teil, nahe bei ihrem mit der Glocke (3) verbundenen Ende mit Ausgangsstutzen (87) versehen, die radial austreten u. an dem Außenmantel Glocke (3) entlang verlaufen, um bei den Zuleitungen der Steuerteile des Ausgleichs-Spannfutters (69) zu enden.

16. Maschine nach Anspruch 13, dadurch gekennzeichnet, daß der Referenzzylinder (70) auf den Zylinder zur vertikalen Verschiebung (71) montiert ist, wobei eine Stützplatte (92) dazwischensitzt, die außerdem einen Schaft (93) trägt, der die Druckplatte (81) durchquert u. einen Endkontakt (94), der zur Unterbrechung der Speisung des Zylinders (70) bestimmt ist, sobald besagter Endkontakt betätigt wird, die Stützplatte wirkt außerdem in Ruhestellung des Zylinders (71) auf den Endkontakt (128).

17. Maschine nach Anspruch 13, dadurch gekennzeichnet, daß die Glocke (3) auf ihrer äußeren Mantellinie mit einem geschweißten Ring (96) versehen ist, der zur Befestigung einer walzenförmigen, beweglichen Einheit (97) dient die mit der Glocke (3) durch ein Antriebsritzel (98) verbunden ist, das gleichzeitig an dem Ring (96) u. an dem beweglichen Ring eines Kugelkranzes (99) befestigt ist, dessen statischer Teil an der Basis der beweglichen Einheit (97) befestigt ist.

18. Maschine nach Anspruch 13, dadurch gekennzeichnet, daß der Satz Eichgeräte für die Schraubstärke der Elektrode (64) aus einem Waagebalken (76) besteht, der über dem Antriebsritzel (98) angeordnet u. auf den Ring (96) der Glocke (3) zentriert ist u. mit zwei Sätzen bestehend aus je einer Schraube (100)—Distanzstück (101) an einem Bedienungshebel (102) befestigt ist, der an eine Führungsbuchse (103) angeschweißt ist u. in der Mitte Zylinderkolben (104) tragt, wobei dieser Kolben auf aufgeschichteten, elastischen Beilagscheiben (105) liegt, die in der Bohrung der Lenkwelle (106) geführt werden, welche auf einer Spannplatte des Zylinders (104) verschweißt u. mit der Oberfläche der beweglichen Einheit (97) verbunden ist, aus einem Meßwertgeber (77), der auf ein Winkelband montiert ist, das mit der Oberfläche der beweglichen Einheit (97) fest verbunden ist, u. aus einer halbmondförmigen Spannbacke (78), die in einer Bohrung ruht, welche an der Oberfläche der beweglichen Einheit (97) angebracht ist, wobei die Abflachung der Spannbacke (78) auf einer Ebene mit dem Kolben des Meßwertgebers liegt, u. durch das Zentrum der Glocke (3) läuft, wobei sich Meßwertgeber u. Spannbacke diametral gegenüberliegen, u. der Waagebalken zweiarmig u. auf einer Kreislinie mit zwölf Aussparungen (107') versehen ist, in die sich bei der Eichung drei Zapfen (107) einpassen, die auf dem Antriebsritzel (98) befestigt sind.

19. Maschine nach einem der Ansprüche 17 u. 18, dadurch gekennzeichnet, daß auf der Oberfläche der beweglichen Einheit (97) außerdem einerseits ein pneumatischer Motor (113) zum Antrieb der Glocke (3) mittels des Antriebsritzels (98) zum Verschrauben der Elektroden (64) angeordnet ist, sowie Drehzylinder (108) zur Endverschraubung der Elektroden (64) mit Hilfe der Kupplungen (109), u. andererseits ein Distanzstück (110), das auf seinem oberen Flansch einen Kugelkranz (111) trägt, welcher mit der Glocke (3) durch Zapfen (112) verbunden ist u. dadurch die Führung der Glocke (3) gewährleistet.

20. Maschine nach einem der Ansprüche 13 u. 15, dadurch gekennzeichnet, daß das Ausgleichs-Spannfutter (69) aus einem Teller (114) besteht, der an der Glocke (3) befestigt ist u. auf seiner Oberfläche Buchsen (115) trägt, in welchen Hohlzylinder (116) gleiten, die an einem ihrer Enden schwenkbare Spannbacken (117) tragen, aus Hubzylindern (118), die in den Bohrungen der Hohlzylinder (116) liegen u. von der hydropneumatischen Pumpe (95) durch das Drehverbindungsstück (85) gespeist werden, u. die mit den Platten (119) fest verbunden sind, die auf die Buchsen (115) geschraubt sind u. den Schub der Zylinder absorbieren, u. aus Achsen (120), wovon jede an einem Zylinder (116) befestigt ist u. Rillen durchqueren, die in dem Teller (114) sowie in dem Boden der Buchsen (115) vorgesehen sind.

21. Maschine nach einem der Ansprüche 13 u. 20, dadurch gekennzeichnet, daß die Zentrier-Nockenscheibe (75) unter den Teller (114) montiert u. auf die Glocke (3) zentriert ist, u. mit sägezahnartigen Aussparungen (121) in Form von Steigungen versehen ist, wobei an ihrer Unterseite einerseits zwei Sperren (122) angeschweißt sind, die den Zweck haben, mit den beweglichen Widerlagern (123) zusammenzuwirken, die durch den Zylinder (124) betätigt werden u. auf den oberen Flansch des Zwischenstücks (110) montiert sind, u. andererseits Zapfen (125) zur Befestigung des einen Endes von Rückholfedern (126), deren anderes Ende mit Zapfen (127) verbunden sind, die mit der Glocke (3) fest verbunden sind, wobei die Federn (126) das Freigeben der Nockenscheibe (75) nach dem Einzug der beweglichen Anschläge (123) sicherstellen.

22. Maschine nach einem der Ansprüche 13—22, dadurch gekennzeichnet, daß die Antriebs- u. Spannelemente der Maschine durch einen pneumatischen Schaltkreis gesteuert werden, bestehend aus einem Einschaltknopf (132), Verteilern (133 u. 134) zur Speisung der Referenzzylinder (70), aus dem Endkontakt (94), der den Verteiler (134) u. einen Verteiler (135) zur Speisung des Zylinders für die vertikale Verschiebung (71) über einen Verzögerungs-Schalter (136) steuert, zwei Verteilern (137, 138), wobei der Verzögerungs-Schalter (136) die Hubbeschleunigung der Glocke (3) mit den Vorrichtungen in Betracht zieht, die damit über einen Ausgleich-Membranschalter (139) verbunden sind, aus einem Verteiler (140), der von dem Membranschalter (139) gesteuert wird, aus einer Druckzelle (141), die als Sicherheitsventil mit Differenzialdruck funktioniert, u. aus Sicherheitsventilen (142) u. (143).

23. Maschine nach einem der Ansprüche 13—22, dadurch gekennzeichnet, daß sie mit Hilfe einer Stützplatte (68), pneumatischer Kissen (144), die mit einer Flüssigkeit gefüllt, miteinander durch Leitungen (145) verbunden, u. an der Platte (68) befestigt sind, u. Widerlagern (146), die mit der Platte (68) verankert sind, auf einen Transportwagen montiert wird, der aus einem Winkelprofilrahmen (147) mit Laufrollen (148) besteht, wobei dieser Wagen auf einer Rollbahn, bestehend aus Schienen (149), mittels eines Getriebemotors mit Hohlwelle (150), Ketten (151), die an ihren Enden mit einer am Wagen befestigen Klammer (152) verbunden sind, verschiebbar ist, u. aus Antriebs- u. Umkehrwellen (153), die mit Kettenrädern ausgestattet sind.

24. Maschine nach Anspruch 23, dadurch gekennzeichnet, daß auf beiden Seiten des Wagens u. parallel zur Rollbahn (149) Bremsen angebracht sind, die den Zweck haben, die bei der Endverschraubung der Elektrode entstehende Reaktionskraft zu absorbieren, wobei jede Bremse aus einer Backe (157) besteht, deren Profil des Bremsteils dem Profil der Rollbahn (149) angepaßt ist, aus einer Druckplatte (158), die mit der Backe (157) durch zwei Gestänge verbunden ist, die den dem Wagen entsprechenden oberen Flügel des Winkelprofils (147) durchqueren, aus einem elastischen Zylinder (159), der zwischen dem Winkelprofil (147) u. der Druckplatte (158) sitzt, u. das Schließen der Bremsen sicherstellt, u. aus Rückholfedern, die auf die Verbindungsstangen der Backe (157) u. der Platte (158) montiert sind u. gewährleisten, daß sich die Backe (157) mit Sicherheit öffnet.

25. Maschine nach einem der Ansprüche 23 u. 24, dadurch gekennzeichnet, daß sie zwischen zwei Montageständen verschiebbar montiert ist u. ihre Verschiebungen von Endkontakten (160) kontrolliert werden, wovon jeder in der Achse eines Montagestandes sitzt u. auf einer Flanke der Rollbahn (149) befestigt ist, wobei diese Endkontakte in den extremen Positionen des Wagens mit einer Nockenscheibe (161) zusammenwirken, die an der letzteren befestigt u. auf die Achse der Glocke (3) ausgerichtet ist, u. der Kontakt zwischen der Nockenscheibe (161) u. einem der Endkontakte (160) die Unterbrechung der Speisung des Getriebemotors (150) u. die Betätigung der Bremsen bewirkt.

26. Maschine nach einem der Ansprüche 23 u. 24, dadurch gekennzeichnet, daß zwei identische Maschinen nebeneinander auf einen Wagen (171) montiert sind, der auf einer Rollbahn (172) verschiebbar ist, u. die selbst an einem Ende um eine Vertikalsäule (173) schwenkbar ist, während ihr anderes Ende auf einer gekrümmten Schiene (174) geführt u. auf dieser Schiene durch einen Getriebemotor (175), Kettenräder (176) u. eine an dem besagten Ende befestigen Kette (177) angetrieben wird.

27. Maschine nach Anspruch 26, dadurch gekennzeichnet, daß auf dieser gekrümmten Schiene (174) Endkontakte (178) vorgesehen sind, welche das Ausrichten der Symetrieachse der Rollbahn (172) des Wagens (171) mit Hilfe einer an besagter Rollbahn (172) befestigten Nocke (179) auf die Achse der abzuschraubenden oder anzustückenden Elektrode erlaubt, u. die Ausrichtung der Maschinen in der Achse der Elektroden wird durch den Kontakt einer an dem Wagen (171) befestigen Nocke (18) mit Endkontakten (181) bestimmt, die auf der Flanke einer der Schienen der Rollbahn (172) sitzen.

28. Maschine nach einem der Ansprüche 26 u. 27, dadurch gekennzeichnet, daß die der Maschine zum Ab- u. Anschrauben der Spitze zugeteilte Glocke (3) doppelwandig ist, u. vorteilhaft eine Zwischenisolation besitzt sowie an ihrer Basis eine Vorrichtung zum Beaufschlagen mit Luft, wodurch eine zwangsläufige Konvektion zwischen der ab- oder anzuschraubenden Spitze u. der Glockenwandung entsteht, u. die Auflagen der Spannbacken der besagten Maschine sind mit einem Kühlkreislauf versehen, der durch das Drehverbindungsstück (85) gespeist wird, während die Maschine, die zum Verschrauben einer Elektrode (64) dient, die Zentrierteile der besagten Elektrode enthält, u. die gesamte, so montierte Vorrichtung wird vor der Wärmeabstrahlung des Ofengewölbes (182) durch eine Maske aus Keramikfasern geschützt, die am Wagen (171) befestigt ist u. über den Glocken (3) jeder Maschine zwei Öffnungen hat.

29. Maschine nach einem der Ansprüche 1—22, dadurch gekennzeichnet, daß zum Anstücken der Elektroden von oben das Gehäuse (1), in dem die Glocke (3) sitzt, mit der Öse (2) zum Hängen an einen Haken des Laufkrans, über pneumatische Federn (184) verbunden ist, das obere (4) u. untere (5) Klemmfutter sowie das Zentrierfutter (7) werden hydropneumatisch gesteuert, das obere Klemmfutter (4) arbeitet mit einer Zentrier-Nockenscheibe (75') zusammen, eine hydropneumatische Pumpe (95') speist die besagten Klemmfutter über einen dazwischensitzenden, pneumatischen Steuerkreis, dessen Speisung durch Luftdruckbehälter (185) mit periodischer Füllung über ein Überdruck (186) erfolgt.

30. Maschine nach Anspruch 29, dadurch gekennzeichnet, daß über der Glocke (3) außerdem ein Satz Eichgeräte (76—78) zur Eichung der Schraubstärke der Elektroden vorgesehen ist, dessen Waagebalken (76) mit Hilfe eines Bedienungshebels (102), an dem er befestigt ist, vertikal verschiebbar ist, u. von einem Zylinder betätigt wird, wobei dieser Waagebalken (76) in Eichstellung mit an dem Antriebszahnring (36) sitzenden Zapfen (107) zusammenwirkt, sowie mit einem Meßwertgeber (77) u. einem Widerlager (78).

31. Maschine nach einem der Ansprüche 29—31, dadurch gekennzeichnet, daß das Zentrierfutter (7) durch einen Drehzylinder (191) betätigt wird, dessen Achse ein Ritzel (192) antreibt, das mit dem Zentrierfutter (7) verankert ist u. in ein Zahnsegment (193) greift, das mit einer Nocke (194) fest verbunden ist u. die Verschiebung der Spannbacken (195) des Zentrierfutters mittels Achsen (196) sicherstellt, die an den Steigungen der Nocke (194) entlanggleiten, die Spannbacken (195) werden so in Kontakt mit der Elektrode gebracht u. ihr flacher Teil (197) schiebt sich unter die letztere, um beim Transport jedes Risiko des zufälligen Herausrutschens der Elektrode zu vermeiden.

32. Maschine nach einem der Ansprüche 29—31, dadurch gekennzeichnet, daß sie außerdem mit einer vertikalen Achse (198) versehen ist, die von einem Zylinder (199) angetrieben wird, der gleichzeitig mit der Schließung des Zentrierfutters (7) durch den Kontakt (55) betätigt wird, mit Zwischenschaltung eines regelbaren Verzögerungs-Schalters, diese Achse (198) weist an ihrem unteren Ende eine Stange (200) auf, die im Verhältnis zur Horizontalen geneigt ist u. mit einem beweglichen Anschlag (201), der am anderen Ende der Achse (198) sitzt, über einen Seilzug (202) verbunden ist, u. andererseits an ihrem oberen Ende mit einem Anschlag zur Betätigung des Kontakts (203) zur Steuerung des mit der Achse (198) verbundenen Drehzylinders, der sie zur Rotation antreibt, um ihre Steuerstange (200) in Richtung Achse der Maschine zu stellen.

33. Maschine nach Anspruch 31, dadurch gekennzeichnet, daß der Anschlag (201) bei der Abwärtsbewegung der Maschine, sobald die Stange (200) die Elektrode berührt, einen Schalter (204) für den Betrieb der Düsen (215) betätigt sowie das Ausschwenken der Stange (200) durch Rückdrehung des Drehzylinders für den Antrieb der Achse (198), wobei der Anschlag zur Rotation des Zylinders das erneute Einschwenken der Achse (198) mittels des Zylinders (199) über einen Kontakt steuert, der auf dem Gehäuse des besagten Drehzylinders sitzt.

34. Maschine nach Anspruch 31, dadurch gekennzeichnet, daß eine der Spannbacken (195) des Zentrierfutters (7) mit einer Steuerstange (205) eines Verteilers (206) bestückt ist, der, wenn er mit der Vorderseite der Elektrode Kontakt hat, einen Drehzylinder sur Schließung des unteren Klemmfutters (5) in Gang setzt, über eine Achse (207), die ein Ritzel (208) antreibt, das mit dem Klemmfutter (5) fest verbunden ist u. in ein Zahnsegment (209) greift, das mit der Nocke (210) verbunden ist, welche die Verschiebung der Spannbacken (211) mittels Achsen (212) durchführt, die entlang den Steigungen der Nocke (210) gleiten, wobei in den Spannbacken jeweils ein Hubzylinder (213) sitzt, der nach Kontakt der Spannbacken mit der Elektrode durch die hydropneumatische Pumpe (95') gespeist wird, welche durch einen Membranschalter gesteuert wird, der auf die Speiserleitung des Drehzylinders montiert ist, wobei dieser Membranschalter gleichzeitig die Öffnung des Zentrierfutters (7) steuert u. das unter Druck setzen der in den Spannbacken (195) untergebrachten Hydraulikzylinder (213) mit Hilfe der Pumpe (95').

35. Maschine nach Anspruch 29, dadurch gekennzeichnet, dass das Klemmfutter (5) durch ein Paar Zentrierstifte (214) ersetzt wird, die mittels Zylinder (216) einziehbar sind, u. mit entsprechenden Bohrungen (217) des flansches (218) zusammenwirken, der mit der Elektrodenauflage oder der Elektrodenklemme fest verbunden ist.

36. Transportnippel für Elektroden von Lichtbogenöfen, der dem Gerät zum Annippeln beigefügt werden kann nach Anspruch 1—35 dadurch gekennzeichnet, dass er versenkbar ist und im wesentlichen aus Spannbacken (219) mit Gewinden besteht, die, mit der Möglichkeit zu gleiten, mittels Achsen (230) gegen Federn (231), auf eine konische Führung (220) montiert sind, aus einer Welle (221), die mit der Öse (222) zum Hängen an einen Haken des Laufkrans fest verbunden ist, aus einem Sperrsatz für die Spannbacken (219) in der Betriebsposition, der ein Kniegelenk hat, das aus einem Kniehebel (223) besteht, der mit Schwingarmen (224) zusammenwirkt, u. einen Stempel (225) betätigt, der mit einer Stell- u. Spannpatrone (226) versehen ist, aus einer Zwischenplatte (232), die unter dem Stempel (225) angeordnet ist, u. aus einer beweglichen Hülse (227) zum Sperren der Schwingarme (224), die einerseits versehen ist mit einer Transportöse (228) mit Kette (233) zum Hängen an eine Kettenglied des Laufkrans u. andererseits mit einer Entriegelungsnase (229) für den Hebel des Kniegelenks.

**Claims**

1. Machine for replacing electrodes of electric arc furnaces, constituted essentially by a body (1) having a handle (2) for engagement by the hook of a traversing hoist, by a sheath (3) disposed in the body (1) and having two gripping chucks, respectively an upper (4) and a lower (5), and by a device (6) for driving in rotation the sheath (3), characterized in that the sheath (3) is provided, between its gripping chucks, with a centering chuck (7), in that the upper chuck (4) is provided with an expansible support (8) limiting its opening, and with pinions (9) for driving the gripping spiral of the retractable jaws (10), and in that the device (6) for driving in rotation the sheath (3) is constituted by a screw (11)—nut (12) assembly for moving in translation the sheath (3), by motors (13) for the final screwing of the electrode, and by a device (14) for driving in rotation and for braking the sheath (3), the assembly of the control elements being pneumatically operated.

2. Machine according to claim 1, characterized in that the centering chuck (7) is constituted by jaws (15) with an internal shoulder (15''), which engage with their rear face a toothed spiral (16), whose teeth coact with the pinion (17) of the shaft of a pneumatic motor (18), by plates (19) and (20) secured to the body (1), and serving respectively as a support for the motor (18) and for centering and guiding the toothed spiral (16), and for guiding the jaws (15), by an assembly of a support (21)-end-of-course (22) for opening the jaws (15), and by a support (23)-control rod (24)-end-of-course contact (25) assembly for the approach of the loaded machine to an electrode in service.

3. Machine according to claim 2, characterized in that the jaws (15) are provided each with a foot (15') protruding in the direction of the lower gripping chuck (5) and inclined outwardly relative to the axis of the sheath (3) at an angle corresponding to the angle of inclination of the screw-threaded portion of the end of the electrode, and the internal shoulder (15'') forms a safety wedge for transport and has a thickness such that any contact between the screw threads of the electrodes to be assembled will be avoided.

4. Machine according to claim 1, characterized in that the expansible support (8) of the chuck (4) is constituted preferably by two circular segments interconnected in the manner of hinges by means of axles (26) secured to the jaws (10), and preferably covered by a neoprene sleeve, and the drive pinions (28) for the gripping spiral (27) by means of a pneumatic motor (32), are each in disconnectible driving connection with said spiral (27) by means of a pinion (9) retractable by means of a jack (29) and a joint (30) by pivoting about an axle (31).

5. Machine according to claim 1, characterized in that the screw (11) of the screw (11)—nut (12) assembly for displacing in translation the sheath (3) is secured to the latter by means of flexible jacks (33), preferably connected to a buffer tank (33'), and coacting with a drum (34) secured to a plate (25) at the upper end of the sheath (3), this plate bearing a toothed ring (36) to be driven in rotation coacting with the motors (13) and with the device (14).

6. Machine according to any one of claims 1 and 5, characterized in that the nut (12) is secured to the body (1) which also bears on the other hand the motors (3) for final screwing of the electrode, which are in the form of connecting jacks (37) provided each with a toothed clutch (38) and a drive pinion (39) coacting with the toothed crown (36), and on the other hand the device (14) for driving in rotation and braking the sheath (3), which is constituted by a pinion (40) for driving the sheath (3), secured to a pneumatic motor (41), and by a brake (42) interposed between the motor (41) and the pinion (40).

7. Machine according to any one of claims 1, 5 and 6, characterized in that the nut (12) is provided with an end-of-course contact (43) detecting the vertical displacement of the sheath (3) under the effect of inflation of the flexible jacks (33), which actuate the drum (34), and on the lifting shaft (44) secured to the nut (12) and the lifting handle (2) are provided upper and lower end-of-course contacts (45) and (46) of the screw (11), which coact with a washer (47) secured to the latter.

8. Machine according to any one of claims 1, 5 and 6, characterized in that the drive shaft of at least one pinion (39) of a motor (13) is provided also with a cam (48) coacting with an end-of-course contact (49) for limitation of the rotation of the pinion (39), which is in circuit with a timed pressure control preset to value slightly less than that of the gripping couple necessary between the electrodes, and which actuates after a delay the clutch (38) of the jack (39) and controls the return of this latter if said couple is not attained, so as to repeat the gripping until the couple is attained.

9. Machine according to any one of claims 1 and 5, characterized in that the feeding with compressed air of the flexible jacks (33) and of the buffer reservoir (33') is effected by a conduit coaxial with the screw (11) which is provided with a rotatable connection (50) connected to the principal compressed air feed conduit, which is connected either to a compressor on the traversing hoist through a flexible conduit, or to a container under pressure provided in or on the body (1).

10. Machine according to any one of claims 1 and 4, characterized in that the upper chuck (4) is moreover provided with a retractable end-of-course contact (51) actuated by a jack (52), and controlling the opening of the lower chuck (5) as well as a timer for raising the sheath (3) to its point of departure after an operation of screwing the electrode.

11. Machine according to claim 1, characterized in that the lower chuck (5) is provided, on the one hand, on the periphery of its guide part (53), with blowers (54) whose time of functioning is limited by a timer, and whose actuation is controlled by a timed interrupter (55) actuated by a rod (56) protruding from the lower portion of the chuck (5), and on the other hand with an end-of-course contact (57) for opening the jaws (58) coacting by means of a rod (59) with a cam (60) secured to a jaw (58), the jaws (58) being provided moreover each with an abutment (61) coacting with a corresponding recess of a guide plate (62).

12. Machine according to any one of claims 1, 3, 5, 7 and 10, characterized in that the sheath (3) is provided about its periphery, at the level of the shoulders (15″) of the jaws (15) of the centering chuck (7), with blowers (63), whose actuation is controlled by a timer by the end-of-course contact (22) for opening the jaws, and whose period of operation is controlled by another timer as needed.

13. Machine according to any one of claims 1 to 12, characterized in that for replacing electrodes from below, it is essentially constituted by a sheath (3), disposed in a vertical frame in two lower (67) and upper (67′) portions interconnected by a support plate (68), and provided near its opening with a single differential chuck (69) hydropneumatically controlled, by a reference jack (70)—vertical translatory jack (71) assembly acting on the lower portion of the sheath (3) by means of a pressure plate (81), by a hollow support (72) and by the screw (73)—nut (74) assembly for screwing the electrode (64), by a centering cam (75) centered on the sheath (3) and coacting with the differential chuck (69), and by an assembly (76, 77, 78) for measuring the screwing force of the electrode (64) mounted on the upper portion (67′) of the vertical frame.

14. Machine according to claim 13, characterized in that the jack (71) for vertical translatory movement is secured on a reaction plate (82) secured to the lower portion (67) of the vertical frame and housing two columns (83), whose upper end is maintained by means of supports secured to the frame, and which act to prevent the gyration of the nut (74) by means of the pressure plate (81) and the hollow support (72), the plate (81) serving moreover to support eccentric brakes (84) acting on the columns (83).

15. Machine according to claim 13, characterized in that the screw (73), coacting with the nut (74) is traversed by coaxial bores and is connected to a turnable coupling (85) with multiple orifices, disposed in the hollow support (72), connected to a hydropneumatic pump (95) secured on the plate (81), and guided in said support (72), without the possibility of rotation, thanks to a rod (86) secured to the coupling (85) and traversing a longitudinal groove in the support (72), the screw (73) being provided, at its upper part, near its end connected to the sheath (3), with outlet tubes (87) extending radially and which extend along the exterior wall of the sheath (3) to terminate at the feed entrances of the control means for the differential chuck (69).

16. Machine according to claim 13, characterized in that the reference jack (70) is mounted on the vertical translatory movement jack (71) by a support plate (92), which also carries a rod (93) traversing the pressure plate (81) and carrying an end-of-course device (94) adapted to interrupt the feed to the jack (70), as soon as said end-of-course device is actuated, the support plate acting moreover in the rest position of the jack (71) on an end-of-course device (128).

17. Machine according to claim 14, characterized in that on its external generatrix, the sheath (3) is provided with a welded ring (96) which serves for the securement of a mobile assembly (97) in the form of a drum connected to the sheath (3) by a drive crown (98) secured also to the ring (96) and to a movable ring of a circular ball bearing (99), whose stationary part is secured to the lower surface of the movable assembly (97).

18. Machine according to claim 13, characterized in that the assembly for measuring the screwing force of the electrode (64) is constituted by a measuring beam (76) disposed above the drive crown (98), centered on the ring (96) of the sheath (3), and connected by two screw (100)—crossbar (101) assemblies to a control lever (101) welded to a guide socket (103) carrying at its center the piston of a jack (104), this piston resting on stacked resilient rings (105) guided in the bore of a guide shaft (106) welded to the securement plate of the jack (104) and connected to the upper face of the movable assembly (97), by a measuring collector (97) mounted on a frame secured to the upper face of the movable assembly (97), and by an abutment (78) in the shape of a half-moon disposed in a recess provided in the upper face of the movable assembly (97), the flat of the abutment (78) being positioned in the plane of the piston of the collector (77) passing through the center of the sheath (3), the collector (77) and abutment (78) being diametrically opposed, and the beam (76) comprising two branches and being provided on one generatrix with twelve holes (107′) in which engage, during measurement, three lugs (107) secured to the drive crown (98).

19. Machine according to any one of claims 17 and 18, characterized in that on the upper face of the movable assembly (97) are disposed moreover on the one hand a pneumatic motor (113) for driving the sheath (3) by means of the drive crown (98) for screwing the electrodes (64), as well as rotatable jacks (108) for final screwing of the electrodes (64) by means of clutches (109), and on the other hand a crossbar (110) carrying on its upper flange a circular ball bearing (111) connected to the sheath (3) by lugs (112) ensuring the guidance of the sheath (3).

20. Machine according to any one of claims 13 and 15, characterized in that the differential chuck (69) is constituted by a plate (114) secured to the sheath (3) and carrying on its upper face supports (115), in which slide hollow cylinders (116) bearing at one of their ends pivoting jaws (117), by hydraulic jacks (118) disposed in recesses of the cylinders (116), fed by the hydropneumatic pump (95) through the rotatable coupling (85) and secured to plates (119) screwed on the supports (115) and absorbing the force of the jacks, and by axles (120) each secured to a cylinder (116) and traversing grooves provided in the plate (114) as well as in the base of the supports (115).

21. A machine according to any one of claims 13 and 20, characterized in that the centering cam (75) is mounted below the plate (114), is centered on the sheath (3), and is provided with seats in the form of ramps (121), on its lower face being welded on the one hand to stops (122) adapted to coact with movable abutments (123) actuated by jacks (124) and mounted on the upper flange of the crosspiece (110), and on the other hand lugs (125) for securement of an end of return springs (126) whose other end is connected to lugs (127) secured to the sheath (3), the springs (126) ensuring the disengagement of the cam (75) after retraction of the movable abutments (123).

22. Machine according to any one of claims 13 to 21, characterized in that the actuating members and gripping members of the machine are actuated by a pneumatic control circuit constituted by a start button (132), by distributors (133 and 134) for feeding the reference chuck (30), by the end-of-course device (94) controlling the distributor (134) and a distributor (135) for feeding the vertical translatory movement jack (71), through a timer (126), to distributors (137, 138), the timer (136) taking account of the acceleration of the rising of the sheath (3) with the devices connected thereto by means of a differential pressure control (139), by a distributor (140) controlled by the pressure control (139), by a cell (141) serving as a differential pressure safety valve, and by safety valves (142 and 143).

23. Machine according to any one of claims 13 to 22, characterized in that it is raised by means of the support plate (68), flexible cushions (144) filled with a liquid, interconnected by conduits (145), and secured to the plate (68), and by abutments (146) secured to the plate (68), on a transport carriage constituted by an angle iron frame provided with rollers (148), this carriage being displaceable on a rolling track formed by rails (149) by means of a motor reducer with a hollow shaft (150), by chains (151) connected by their ends to a shoe (152) secured to the carriage, and by drive and return shafts (153) provided with chain wheels (154).

24. Machine according to claim 23, characterized in that on either side of the carriage, and parallel to the rolling track (149), are secured brakes adapted to absorb the reaction forces due to the final screwing of the electrode, each brake being constituted by a jaw (157), whose shape of the braking portion is adapted to the profile of the rolling track (149), by a pressure plate (158) connected to the jaw (157) by two rods traversing the upper flange of the frame (147) corresponding to the carriage, by a flexible jack (159) disposed between the flange of the frame (147) and the pressure plate (158), and ensuring the closing of the brake, and by return springs mounted on connecting rods of the jaw (157) and of the plate (158) ensuring the safe opening of the jaw (157).

25. Machine according to any one of claims 23 and 24, characterized in that it is mounted on its carriage in a movable manner between two mounting stations and that its displacements are controlled by means of end-of-course devices (160) each disposed on the axis of a mounting station and secured to the flange of a rail of the rolling track (149), these end-of-course devices coacting in the end positions of the carriage, with a cam (161) secured to the latter and aligned with the axis of the sheath (3), the contact between the cam (161) and one of the end-of-course devices (160) having the effect of cutting off the feed of the motor reducer (150) and to actuate the brakes.

26. Machine according to any one of claims 23 and 24, characterized in that two identical machines are mounted side-by-side on a carriage (171) displaceable on a rolling track (172), a self pivotable at one end about a vertical standard (173), its other end by guided on a curvilinear rail (174) and driven along this rail by means of a motor reducer (175), with chain wheels (176) and a chain (177) connected to said end.

27. Machine according to claim 26, characterized in that on the curvilinear rail (174) are provided end-of-course devices (178) permitting the alignment of the axis of symmetry of the rolling track (172) of the carriage (171) in cooperation with a cam (179) secured to said rolling track (172), with the axis of the electrode to be unscrewed or replaced, and the alignment of the machines along the axis of the electrodes is defined by the contact of a cam (180), secured to the carriage (171) with end-of-course devices (181) disposed on the flank of one of the rails of the rolling track (172).

28. Machine according to any one of claims 26 and 27, characterized in that the sheath (3), belonging to the machine for unscrewing and screwing from the end, is double walled and comprises advantageously intermediate insulation as well as an air injection device at its base creating a forced convection between the end to be unscrewed or screwed and the wall of the sheath, and the jaw supports of said machine are provided with a cooling circuit fed through the rotatable coupling (85), while the machine serving for screwing an electrode (64) comprises centering elements for said electrode, and the assembly of the device thus constituted is protected from radiation from the hearth (182) by a carapace of ceramic fibers, secured to the carriage (171) having two openings above the sheaths (3) of each machine.

29. Machine according to any one of claims 1 to 22, characterized in that, to replace electrodes from above, the body (1) receiving the sheath (3) is connected to the handle (2) for engagement with the hook of a traversing hoist by means of pneumatic springs (184), the upper (4) and lower (5) gripping chucks, as well as the centering chuck (7) are hydropneumatically controlled, the upper chuck (4) coacting with a centering cam (75'), a hydropneumatic pump (95') feeding said chucks through a pneumatic control circuit, whose feed is ensured by compressed air reservoirs (185) refilled periodically by means of a compressor (186).

30. Machine according to claim 29, characterized in that above the sheath (3) is provided moreover a measuring assembly (76 to 78) for the force of screwing of the electrodes, whose beam (76) is displaceable vertically by means of a maneuverable lever (102) to which is connected, and which is actuated by a jack, this beam (76) coacting, in the measuring position, with lugs (107) secured to the drive crown (36), as well as a measurement collector (77) and an abutment (78).

31. Machine according to any one of claims 29 and 30, characterized in that the centering chuck (7) is actuated by a rotatable jack (191), whose axle drives a pinion (192) secured to the chuck (7) and engaged with a toothed sector (193) secured to a cam (194) ensuring the translatory movement of the jaws (195) of the chuck by means of axles (196) sliding along ramps of the cam (194), the jaws (195) being thus brought into contact with the electrode, and their flat part (197) being disposed beneath the latter, so as to avoid any risk of accidental exit of said electrode during transport.

32. Machine according to any one of claims 29 to 31, characterized in that it is provided moreover with a vertical axle (198) actuated by a jack (199) controlled simultaneously with the closing of the centering chuck (7) by the contact (55) via an adjustable timer, this axle (198) having on the one hand at its lower end a rod (200) inclined relative to the horizontal and secured to a movable abutment (201), secured to the other end of the axle (198), by means of a cable (202), and on the other hand, at its upper end to an abutment for actuating a contact (203) for control of a rotatable jack connected to the axle (198) and imposing on it a rotation in a circular arc so as to dispose its contact rod (200) along the axis of the machine.

33. Machine according to claim 32, characterized in that the abutment (201) actuates, upon descent of the machine, as soon as the rod (200) touches the electrode, an interrupter (204) for the operation of the blowers (215) as well as the withdrawal of the rod (200), by reverse rotation of the rotatable jack driving the axle (198), the end-of-course device for rotation of the jack controlling the return of the axle (198) by means of a jack (199) via a contact disposed on the frame of said rotatable jack.

34. Machine according to claim 31, characterized in that one of the jaws (195) of the centering chuck (7) is provided with a control rod (205) for a distributor (206) actuating in contact with the front surface of the electrode a rotatable jack for closing the lower gripping chuck (5) by means of an axle (207) driving a pinion (208) secured to the chuck (5) and engaging with a toothed sector (209) secured to a cam (210), which ensures translatory movement of the jaws (211) by means of axles (212) sliding along ramps of the cam (210), these jaws housing each a hydraulic jack (213) fed after contact with the jaws with the electrode by the hydropneumatic pump (95'), controlled by a pressure regulator mounted on the feed conduit of the rotatable jack, this pressure regulator controlling simultaneously the opening of the centering chuck (7) and the pressurization of the hydraulic jacks (213), disposed in these jaws (195), by means of the pump (95').

35. Machine according to claim 29, characterized in that the gripping chuck (5) is replaced by a pair of centering points (214), retractable by means of jacks (216) and coacting with corresponding recesses (217) in a plate (218) secured to the support electrode or to the electrode clamp.

36. Transport hanger, for electrode of electric arc furnaces can be added—to the machine according to any one claims 1 to 35—Transport hanger characterized in that it is retractable and is essentially constituted by threaded jaws (219) mounted slidably on a conical ramp (220), by means of axles (230) against the action of springs (231), by a shaft (221) secured to a handle (222) for engagement with the hook of a traversing hoist, by an assembly for locking the jaws (219) in operative position comprising a connection comprised by a cranked lever (223) coacting with rods (224) and actuating a pusher (225) provided with a pin for regulating gripping (226), by an intermediate plate (232) disposed below the pusher (225), and by a movable ring (227) for locking the rods (224), provided on the one hand with a manipulating handle (228) with a chain (233), for securement to a chain bar of the traversing hoist, and on the other hand by an unblocking lug (229) for the lever (223) of the connection.

Fig.1

Fig. 2

0 122 212

Fig.3

27  31  9          30   29

28

26

8

29

10

31

30                              9

31                              30

52                              29

51

Fig.4

41        37

37                              49

33

33'

36

39

Fig.5

# Fig. 6

# Fig. 7

# Fig. 8

— 80

— 121

— 127

— 126

125

Fig. 9

Fig.10

Fig.18

Fig.11

Fig.12

Fig.13

174

179

178

175

**Fig.14**

Fig.15

Fig.16

216 —

— 216

214 —

— 214

217 —

— 217

218

**Fig.17**